(19) Europäisches Patentamt
European Patent Office
Office européen des brevets

(11) **EP 3 717 200 B1**

(12) **EUROPÄISCHE PATENTSCHRIFT**

(45) Veröffentlichungstag und Bekanntmachung des Hinweises auf die Patenterteilung:
**27.04.2022   Patentblatt 2022/17**

(21) Anmeldenummer: **18815113.8**

(22) Anmeldetag: **20.11.2018**

(51) Internationale Patentklassifikation (IPC):
**B29C 49/12** *(2006.01)*        **B29C 49/78** *(2006.01)*
**B29C 49/06** *(2006.01)*        **B29C 49/64** *(2006.01)*
**B29C 49/36** *(2006.01)*        **B29C 49/46** *(2006.01)*
**B29B 13/02** *(2006.01)*

(52) Gemeinsame Patentklassifikation (CPC):
**B29B 13/02; B29B 13/024; B29C 49/6454;**
**B29C 49/786;** B29C 49/06; B29C 49/12;
B29C 49/36; B29C 2049/129; B29C 2049/4664

(86) Internationale Anmeldenummer:
**PCT/EP2018/081937**

(87) Internationale Veröffentlichungsnummer:
**WO 2019/101743 (31.05.2019 Gazette 2019/22)**

(54) **TEMPERIERVORRICHTUNG FÜR DIE TEMPERATURKONDITIONIERUNG VON VORFORMLINGEN UND VERFAHREN ZUM BETREIBEN EINER SOLCHEN TEMPERIERVORRICHTUNG**

TEMPERATURE CONTROL DEVICE FOR THE THERMAL CONDITIONING OF PREFORMS AND METHOD FOR OPERATING SUCH A TEMPERATURE CONTROL DEVICE

DISPOSITIF DE THERMORÉGULATION POUR LE CONDITIONNEMENT THERMIQUE DE PRÉFORMES ET PROCÉDÉ PERMETTANT DE FAIRE FONCTIONNER LEDIT DISPOSITIF DE THERMORÉGULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2017   DE 102017010970**

(43) Veröffentlichungstag der Anmeldung:
**07.10.2020   Patentblatt 2020/41**

(73) Patentinhaber: **KHS Corpoplast GmbH**
**22145 Hamburg (DE)**

(72) Erfinder:
• **ZIMMERING, Bernd**
  **22111 Hamburg (DE)**

• **ULUTÜRK, Deniz**
  **22761 Hamburg (DE)**
• **RASCH, Jens-Peter**
  **22926 Ahrensburg (DE)**
• **FIRCHAU, Daniel**
  **23911 Schmilau (DE)**
• **MÜNDEL, Christian**
  **22949 Ammerbek (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
EP-A2- 2 383 102      EP-A2- 2 460 638
WO-A1-99/48669      JP-A- 2013 248 748

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer Temperiervorrichtung für die Temperaturkonditionierung von Vorformlingen aus einem thermoplastischen Material nach dem Oberbegriff von Anspruch 1. Die Erfindung betrifft weiterhin eine Temperiervorrichtung für die Temperaturkonditionierung von Vorformlingen nach dem Oberbegriff von Anspruch 8. Schließlich betrifft die Erfindung eine Maschine für die Herstellung von Behältern aus Vorformlingen nach dem Oberbegriff von Anspruch 13.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Temperiervorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil aufgeprägt wird. Die Blasformung von Behältern aus Vorformlingen unter zusätzlicher Verwendung einer Reckstange ist ebenfalls bekannt.

Aus der WO 99/48669 A1 ist bekannt, den Umformungsprozess vom Vorformling zum Behälter zu steuern bzw. zu regeln anhand von verschiedenen Steuerparametern.

Gemäß einem typischen Weiterverarbeitungsverfahren werden die durch Blasformung hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1.

Bezüglich der Temperaturkonditionierung der Vorformlinge sind die Anforderungen im Wesentlichen identisch unabhängig davon, ob in einem nachfolgenden Schritt die Umformung des mit einem geeigneten Temperaturprofil versehenen Vorformlinges mittels Einleiten eines Gases unter Druck oder mittels einer Flüssigkeit unter Druck erfolgt. Die jeweils vorzusehende Temperiervorrichtung zum thermischen Konditionieren der Vorformlinge und das jeweils anzuwendende Verfahren zum Betreiben einer solchen Temperiervorrichtung sind also für beide bekannten Umformverfahren gleichartig. Die nachfolgend beschriebene Erfindung betrifft beide geschilderten Umformverfahren und die dabei eingesetzten Maschinen und Temperiervorrichtungen gleichermaßen.

Im Stand der Technik bekannte Temperiervorrichtungen bestehen zum Beispiel aus mehreren sogenannten Heizkästen. Diese Heizkästen sind üblicherweise stationär entlang einer Heizstrecke angeordnet und durch diese Heizkästen werden Vorformlinge mittels geeigneter Transporteinrichtungen hindurchbewegt und dabei beheizt. Übliche Transporteinrichtungen bestehen zum Beispiel aus einer umlaufenden Transportkette. Die Kettenglieder werden dabei zum Beispiel von Transportdornen gebildet, von denen jeder durch klemmenden Eingriff in den Mündungsabschnitt eines Vorformlinges einen Vorformling hält und auf seiner umlaufenden Bewegung entlang der Heizstrecke und durch die Heizkästen führt.

In der Regel ist die Temperiervorrichtung modular aufgebaut, d.h. entlang der Heizstrecke sind mehrere solcher Heizkästen als Heizmodul angeordnet. Es kann sich dabei um jeweils gleiche Heizkästen handeln oder um Heizkästen unterschiedlicher Bauart.

Innerhalb der Heizkästen sind zum Beispiel Heizelemente angeordnet. Es werden im Stand der Technik bevorzugt Nahinfrarot-Strahler (NIR) als Heizelemente verwendet, zum Beispiel können in Längsrichtung eines Vorformlings mehrere Nahinfrarot-Strahler als Heizelemente übereinander angeordnet sein. Ein Beispiel für eine solche Temperiervorrichtung und ein Beispiel für den typischen Aufbau eines vorstehend als Heizkasten bezeichneten Heizmoduls zeigt die EP 2 749 397 A1 oder auch die WO 2011/063784 A2.

Es ist im Stand der Technik bekannt, dass diese Temperiervorrichtungen an eine Steuerungseinrichtung angeschlossen sind. Diese Steuerungseinrichtung ist dabei in der Regel so ausgelegt, dass die Vorformlinge innerhalb der Temperiervorrichtung so erwärmt werden, dass sie die Temperiervorrichtung mit einem gewünschten Temperaturprofil verlassen. Darunter ist zu verstehen, dass sowohl eine bestimmte Temperatur im Vorformling realisiert ist als auch ein bestimmter Temperaturverlauf in Längsrichtung des Vorformlinges und ggf. auch in Umfangsrichtung des Vorformlinges. Auch ein Temperaturprofil in radialer Richtung, das heißt innerhalb der Wandstärke des Vorformlings, kann vorgesehen sein.

Es ist im Stand der Technik auch bekannt, dass zum Beispiel zusätzlich zu den vorstehend genannten Heizelementen auch Einrichtungen zur Kühlung der Oberfläche der Vorformlinge vorgesehen sein können, zum Beispiel Einrichtungen zum gezielten Beaufschlagen der Vorformlingsoberfläche mit einer kühlenden Luftströmung. Auch diese zusätzlichen Einrichtungen zur Kühlung können in die genannte Steuerungseinrichtung der Temperiervorrichtung eingebunden sein. Der Begriff der Steuereinrichtung und des Steuerverfahrens umfasst Einrichtungen und Verfahren, mit denen eine Steuerung im Sinne des englischen Begriffes "open-loop control" ausgeführt wird, mit denen eine Regelung im Sinne des englischen Begriffes "closed-loop control" ausgeführt wird, und Mischformen davon. Erfindungsgemäß geht es um die Regelung einer Temperiervorrichtung im Sinne des englischen Begriffes "closed-loop control", so dass in den Ansprüchen von einer Regelung und von einem Heizungsregler gesprochen wird.

Um die Temperiervorrichtung steuerungstechnisch so regeln und/oder steuern zu können, dass am Ausgang der Temperiervorrichtung die Vorformlinge in der gewünschten Weise temperaturkonditioniert vorliegen, also die gewünschte Temperatur und das gewünschte Temperaturprofil aufweisen, ist es im Stand der Technik bekannt, ausgangsseitig der Temperiervorrichtung zum Beispiel einen Messsensor anzuordnen, z.B. einen Pyrometer, der die Oberflächentemperatur an dem Messsensor vorbeilaufender Vorformlinge erfasst. Der Führungswert der Regelung wäre bei einer solchen Ausführungsform die Oberflächentemperatur der Vorformlinge. Dieser Messwert kann zum Beispiel mit einem Sollwert verglichen werden und die Regelung der Temperiervorrichtung kann also auf eine Regelung auf einen Sollwert für die Oberflächentemperatur der Vorformlinge eingestellt sein.

Bei bekannten Temperiervorrichtungen ist teilweise vorgesehen, dass bezüglich in Längsrichtung der Vorformlinge übereinander angeordneter Heizelemente eine Unterscheidung vorgenommen wird. Es wird z.B. für die übereinander angeordneten Heizelemente jeweils eine eigene Heizleistung definiert, die von der Steuerungseinrichtung geregelt und/oder gesteuert wird. Es kann z.B. eine Voreinstellung in der Steuerungseinrichtung dahingehend erfolgen, z.B. durch eine Bedienperson, ob und in welcher Weise auf einem unterschiedlichen Höhenniveau angeordnete Heizelemente unterschiedlich heizen sollen. Die Steuerungseinrichtung kann dafür z.B. einen höhenspezifischen Parameter bereitstellen. Weiterhin ist bekannt, dass ein übergeordneter Leistungsparameter eingestellt wird, der für alle Heizelemente Anwendung findet. Die tatsächliche, von der Steuerungseinrichtung vorgegebene Heizleistung einer Strahlerebene, also aller auf einem gleichen Höhenniveau angeordneten Heizelemente, ergibt sich dann durch Multiplikation beider Parameter. Durch die individuelle Einstellung der Heizleistung pro Heizelementebene ist ein bestimmtes Heizprofil einstellbar. So kann zum Beispiel die Heizleistung in jeder Ebene so eingestellt werden, dass bestimmte Bereiche des Vorformlinges stärker beheizt werden. Gleichzeitig kann die Heizleistung insgesamt eingestellt werden über den für alle Heizelemente gemeinsamen, übergeordneten Leistungsparameter. Die Regelung der Temperiervorrichtung erfolgt dabei im Stand der Technik dadurch, dass der übergeordnete Leistungsparameter in Abhängigkeit vom Pyrometermesswert nachgestellt wird. Der Pyrometermesswert stellt die Führungsgröße der Regelung dar, also z.B. die Oberflächentemperatur der Vorformlinge. Der höhenspezifische Parameter wird im Stand der Technik in den meisten Fällen nicht geregelt, sondern ergibt sich aus dem gewünschten Temperaturprofil in Achsrichtung des Vorformlings. Er wird typischerweise beim Einrichten bzw. beim Einfahren der Maschine eingestellt und bedarfsweise von einer Bedienperson geändert, z.B. bei einer Produktionsumstellung auf andere Vorformlinge.

Es ist im Stand der Technik auch bekannt, die Wandstärke fertig geblasener Behälter messtechnisch zu erfassen und diese Messwerte als Führungsgröße der Heizungsregelung zu nutzen. Die WO 2010/054610 A1 und die WO 2007/110018 A1 sind Beispiele für diesen Stand der Technik, in dem auch die höhenselektive Regelung der Heizleistung anhand zugeordneter Sensoren beschrieben ist.

Die in der Temperiervorrichtung herrschende Temperatur wird im Stand der Technik zum Beispiel durch Temperatursensoren messtechnisch erfasst, die zum Beispiel in einem Reflektor der Temperiervorrichtung angeordnet sein können. Eine solche Temperaturmessung kann zum Beispiel verwendet werden zur Feststellung, ob die Temperiervorrichtung eine bestimmte Solltemperatur erreicht hat, ab der das Einlaufen der Vorformlinge in die Temperiervorrichtung gestartet wird. Es ist auch möglich, mehrere solcher Temperatursensoren vorzusehen.

Die oben beschriebenen Verfahren zur Regelung einer Temperiervorrichtung werden aus verschiedenen Gründen als noch verbesserungswürdig angesehen. Eine Pyrometermessung erfolgt z.B. an der Vorformlingsaußenfläche, deren Temperatur aber durchaus erheblich abweichen kann von der Temperatur der Vorformlingsinnenfläche. Dies resultiert z.B. daraus, dass die Heizstrahlung durch Absorption im Vorformling wirkt, und dass die Absorption auf der Vorformlingsaußenfläche am größten ist, da dort die Heizstrahlung zuerst auftrifft und beim Durchdringen des Vorformlings exponentiell abfallend an Intensität verliert. Zwar finden thermische Ausgleichsprozesse statt. Die üblicherweise für die Vorformlinge verwendeten thermoplastischen Materialien haben aber zumeist eine schlechte Wärmeleitfähigkeit, so dass sich Temperaturunterschiede nur langsam ausgleichen. Sich ändernde Umgebungsbedingungen können die Außentemperatur ebenfalls beeinflussen, z.B. das Hochfahren der Maschine oder Unterbrechungen im Produktionsbetrieb. Die Außentemperatur des Vorformlings beim Verlassen der Temperiervorrichtung spiegelt insofern nicht immer hinreichend genau den Energieinhalt und die Energieverteilung im Vorformling wieder, welche aber die Materialverteilung in den fertig ausgeformten Behältern und damit die Behältereigenschaften bestimmen. Ein Regler mit der Führungsgröße Vorformlingstemperatur wird als nicht ausreichend robust gegen Störgrößen angesehen. Die messtechnische Erfassung von Wandstärken ist mit einigem Messaufwand verbunden und bereits aus diesem Grund verbesserungswürdig. Auch wäre ein früheres Erfassen des Führungswertes als nach vollständigem Abschluss des Umformvorganges wünschenswert.

Die vorliegende Erfindung soll an dieser Stelle eine Verbesserung herbeiführen und die Qualität der Temperaturkonditionierung der Vorformlinge und somit auch die Qualität der daraus hergestellten Behälter verbessern. Auch die Robustheit der Regelung gegen Störgrößen soll verbessert werden.

Diese Aufgabe wird gelöst durch ein Verfahren nach Anspruch 1 bzw. nach Anspruch 7, durch eine Temperiervorrichtung nach Anspruch 8 und durch eine Maschine nach Anspruch 13. Weitere vorteilhafte Merkmale sind in den Unteransprüchen angegeben.

Erfindungsgemäß ist im Kern vorgesehen, dass die Regelung der Temperaturkonditionierung der Vorformlinge anhand der Führungsgröße Reckkraft erfolgt. Die Temperaturkonditionierung findet in der Temperiervorrichtung statt, sodass die Regelung dieser Vorrichtung erfindungsgemäß nach einem Führungswert erfolgt, der in einer so direkten Beziehung zur physikalischen Größe Reckkraft steht, dass diese daraus abgeleitet werden kann. Einerseits ist möglich, die Reckkraft direkt zu erfassen durch Anordnung entsprechender Kraftmesseinrichtungen. Andererseits ist es möglich, einen Wert zu messen, aus dem z.B. in Kenntnis weiterer Größen oder durch Anwendung mathematischer Methoden die Reckkraft errechnet werden kann. Bevorzugt weist dieser Wert eine Proportionalitätsbeziehung zur Reckkraft auf. Zum Zwecke der Regelung muss nicht zwingend die Reckkraft tatsächlich aus den erfassten Werten abgeleitet werden. Die erfassten Werte können auch direkt zur Regelung der Temperiervorrichtung herangezogen werden, insbesondere bei Vorliegen einer Proportionalität, insbesondere bei Vorliegen einer linearen Proportionalität.

Bei mechanisch angetriebenen Reckeinrichtungen, z.B. Reckstangen, kann eine direkte Messung der Reckkraft z.B. über Dehnungsmessstreifen messtechnisch erfasst werden. Bei hydraulisch oder pneumatisch angetriebenen Reckstangen führt z.B. die messtechnische Erfassung des Druckes der Antriebsmedien zu einer Größe, aus der die Reckkraft ableitbar ist. Allerdings ist gerade die Messung mittels einer mit Dehnungsmessstreifen versehenen Reckstange und zugehöriger Messtechnik sehr aufwendig. Bevorzugt verfügt daher die Reckeinrichtung, insbesondere die Reckstange, über ein elektrisches Recksystem, welches die Möglichkeit der Strommessung bietet. Somit kann ohne zusätzliches Messequipment aus der Strommessung auf die Reckkraft zurückgeschlossen werden.

Die erfindungsgemäße Regelung der Temperiervorrichtung nach der Reckkraft darf nicht verwechselt werden mit der Regelung, wie sie in der EP 2 117 806 B1 im dortigen Absatz [0057] beschrieben ist. Dort wird die Reckkraft zur Regelung eines Parameters des Blasprozesses verwendet, welcher aber erst nach der Temperaturkonditionierung ausgeführt wird. Es geht dort explizit um die Regelung des Blasdruckes, der ja auch unmittelbar mit der Reckkraft in Beziehung steht, weil bei Erhöhung des Blasdruckes weniger Reckkraft aufzubringen ist und umgekehrt. Mit der Regelung der Temperaturkonditionierung gibt es in der EP 2 117 806 B1 keinen Berührungspunkt. Beide vorstehend genannten Prozesse zusammen, also die Temperaturkonditionierung und deren Reglung und der Umformungsprozess und dessen Regelung, ergeben lediglich gemeinsam das Herstellungsverfahren aus einem Vorformling einen Behälter zu erzeugen. Regelungstechnisch sind beide Prozesse getrennt zu betrachten.

Im Stand der Technik sind mehrere Arten von Reckeinrichtungen bekannt. In der Praxis durchgesetzt hat sich in weiten Teilen die Verwendung einer Reckstange. Daher wird mit Vorteil vorgeschlagen, dass die Reckeinrichtung als eine von einem elektrischen Reckstangenantrieb angetriebene Reckstange ist, insbesondere von einem Servomotor oder Linearmotor, wobei messtechnisch die Stromaufnahme des elektrischen Reckstangenantriebes erfasst wird. Es liegen dann messtechnisch einfache Bedingungen vor und der messtechnisch leicht erfassbare Strom des Servo- oder Linearmotors lässt auch den Schluss auf die aufgewendete Reckkraft zu.

Im Sinne einer einfachen regelungstechnischen Umsetzung ist bevorzugt, dass für die Regelung nur bestimmte charakteristische Werte des Reckkraftverlaufs bzw. des Führungswertverlaufs herangezogen werden, z.B. lokale Maxima im Kurvenverlauf. Es ist auch bevorzugt, dass z.B. über einen bestimmten Bereich der Reckkraftkurve bzw. der Führungswertkurve integriert wird, um eine sich daraus ergebende Reckenergie bzw. Führungswertenergie zur Grundlage der Regelung zu machen. Es können auch mehrere dieser bevorzugten Werte genommen werden. Dies gilt auch für den Fall, dass die erfassten Messwerte nicht in eine Reckkraft umgerechnet werden, sondern direkt für die Regelung herangezogen werden. Auch in diesem Fall ist die Verwendung der vorstehend genannten charakteristischen Werte und/oder eines Integrales über einen bestimmten Messwertbereich bevorzugt.

Die Regelung der Temperaturkonditionierung kann dadurch noch weiter verbessert werden, dass eine Außentemperatur der Vorformlinge messtechnisch erfasst und dem Heizungsregler als zweiter Führungswert zugeführt wird. Die Tempeiervorrichtung weist einerseits Heizeinrichtungen zum Aufheizen der Vorformlinge und Kühleinrichtungen zum Beaufschlagen der Vorformlinge mit einem Kühlmedium auf. Dabei werden die Kühleinrichtungen, z.B. Lüfter, und die Heizeinrichtungen, z.B. Heizstrahler, vom Heizungsregler jeweils anhand verschiedener Führungswerte geregelt, insbesondere werden die Kühleinrichtungen anhand des Führungswertes Außentemperatur und die Heizeinrichtungen anhand des Führungswertes Reckkraft bzw. einer damit zusammenhängenden Größe geregelt. Eine Umkehrung dieser regelungstechnischen Zuordnung ist im Rahmen der vorliegenden Erfindung aber auch realisierbar. Durch simultanes Heizen und Kühlen lässt sich gut ein dynamisches Gleichgewicht und eine stabile Temperaturkonditionierung einstellen. Insbesondere kann auf diese Art auch ein Temperaturprofil in radialer Richtung im Vorformling eingestellt werden, also innerhalb der Vorformlingswandung.

Da die Reckkraft in unmittelbarem Zusammenhang mit der Materialverteilung im fertigen Behälter und somit zu den Behältereigenschaften steht, ist es bevorzugt, dass der Heizungsregler den Führungswert Reckkraft bzw. den Führungswert, aus dem die Reckkraft ableitbar ist, gegenüber dem Führungswert Außentemperatur priorisiert.

Der Antrieb der Reckstange muss nicht nur die Reckkraft aufbringen, sondern auch Reibungsverluste kompensieren, die durch die Reckstangenbewegung auftreten, z.B. an Dichtungen, durch die die Reckstange geführt ist. Zur Verbesserung der Regelung ist es deshalb von Vorteil, wenn messtechnisch diese Reibungskräfte erfasst und bei der Regelung berücksichtigt werden, z.B. indem die erfassten Stromwerte um den Reibungsanteil bereinigt werden. Die Reibungsverluste lassen sich z.B. erfassen, indem Leerhübe der Reckstange ausgeführt und messtechnisch erfasst werden. Bei einem Leerhub wird die Reckstangenbewegung ohne Vorformling ausgeführt. Reibungsverluste lassen sich auch dadurch berücksichtigen, dass der Bereich der Reckkraftkurve bzw. der Führungswertkurve betrachtet wird, in dem die Beschleunigung des Recksystems entgegen seiner Trägheit abgeschlossen ist, eine Reckung des Vorformlings aber noch nicht begonnen hat. Die Ausführung von Leerhüben wird als bevorzugt angesehen, da dadurch über den gesamten Reckweg der Reckstange Informationen über Reibungsverluste erhältlich sind, während diese Reibungsverluste im anderen geschilderten Fall in den Bereichen der Beschleunigung des Recksystems und der Reckung des Vorformlings mit den effektiv eingesetzten Kräften superponieren und keine Auftrennung zwischen Reibungsverlusten und Beschleunigungs- bzw. Reckkräften möglich ist.

Es kann vorteilhaft sein, die messtechnisch erfassten Werte z.B. einer Filterung zur Glättung zu unterwerfen, bevor diese der Regelung als Führungswert zugrunde gelegt werden.

Die vorstehenden Erläuterungen gelten gleichermaßen für die erfindungsgemäßen Vorrichtungen.

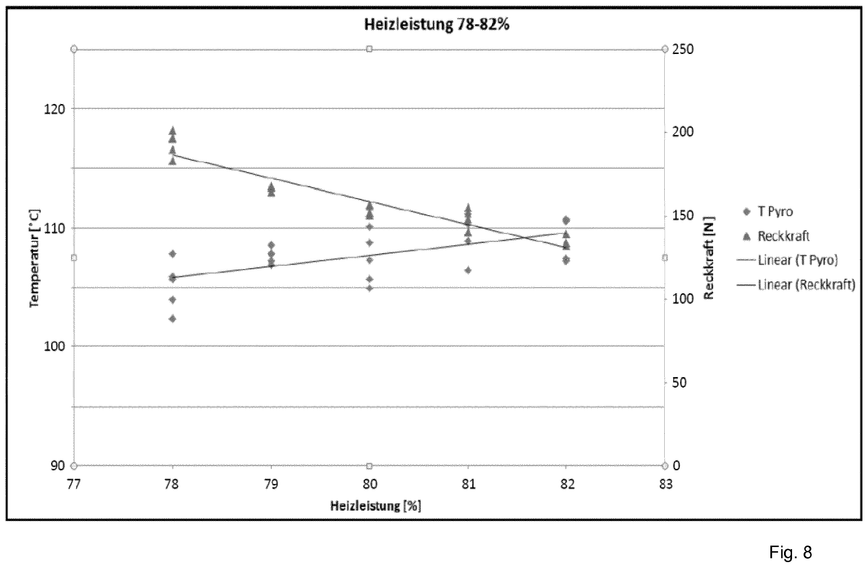

Dass die Reckkraft bzw. ein Führungswert aus dem die Reckkraft ableitbar ist, grundsätzlich geeignet ist, als Führungswert für eine Regelung der Tempeiervorrichtung zu dienen, ergibt sich z.B. aus der Dehnverfestigungseigenschaft von PET, wobei PET hier stellvertretend und ohne Beschränkung der Allgemeinheit für die Klasse der thermoplastischen Materialien steht, die auch bisher schon für die umformende Herstellung von Behältern aus Vorformlingen eingesetzt werden. PET ist lediglich ein Beispiel für ein besonders geeignetes thermoplastisches Vorformlingsmaterial. Aus der Dehnverfestigungseigenschaft kann nämlich gefolgert werden, dass die während des Umformprozesses auftretenden Kräfte eine wichtige Rolle bei den späteren Eigenschaften des ausgeformten Behälters spielen. Einerseits wirkt hierbei der Druck des in den Vorformling eingeführten Formfluids als Kraft auf den Vorformling, andererseits wirkt die Kraft z.B. einer Reckstange, die die entstehende Behälterblase führt und eine Reckkraft ausübt. Aufgrund von Untersuchungen wurde festgestellt, dass die z.B. von der Reckstange ausgeübte Reckkraft sehr sensitiv mit den Eigenschaften des fertigen Behälters verknüpft ist, siehe Figur 8.

Eine messtechnisch einfache Erfassung des Führungswertes Reckkraft bzw. eines Führungswertes, aus dem die Reckkraft ableitbar ist, ist z.B. dann möglich, wenn eine von einem elektrischen Antrieb angetriebene Reckstange vorliegt. Ein Beispiel für eine solche Reckstange mit elektrischem Reckstangenantrieb ist z.B. in der bereits genannten EP 2 117 806 B1 zu finden. Beim dort offenbarten Servomotor kann z.B. mittels des Motorstroms, der Spindelsteigung sowie der Drehmomentkonstante des Motors $K_\phi$ die Kraft in Richtung der Vorformlingslängsachse ermittelt werden aus

$$F(t) = \frac{i(t) \cdot K_\phi \cdot 2\pi}{Spindelsteigung}$$

. Der Motorstrom selber ist eine Größe, die bereits als Führungswert geeignet ist, da aus ihr die Reckkraft ableitbar ist, nämlich durch Berechnung. Die Reckkraft ist sogar in guter Näherung linear proportional zum Strom.

Weitere Vorteile, Merkmale und Details der Erfindung ergeben sich aus den im Folgenden beschriebenen Ausführungsbeispielen unter Bezugnahme auf schematische Zeichnungen. Es zeigen:

Fig. 1    eine stark schematisierte Darstellung einer Umformmaschine bzw. einer Maschine zum Formen von Behältern aus Vorformlingen,

Fig. 2      eine schematisierte Darstellung eines Heizkastens einer Temperiervorrichtung,

Fig. 3      eine Prinzipdarstellung eines temperaturkonditionierten Vorformlings mit Temperaturprofilierung,

Fig. 4      eine schematische Darstellung einer möglichen Steuerungsarchitektur einer Umformmaschine,

Fig. 5      ein bekanntes Regelungsschema für die Regelung einer Temperiervorrichtung,

Fig. 6      ein erfindungsgemäßes Regelungsschema für die Regelung einer Temperiervorrichtung,

Fig. 7      eine schematische Darstellung einer Reckkraftkurve in Abhängigkeit vom Reckweg,

Fig. 8      eine schematische Darstellung des Zusammenhangs zwischen Heizleistung der Temperiervorrichtung und erfasster Außentemperatur des Vorformlings einerseits und zwischen Heizleistung der Temperiervorrichtung und erfasster Reckkraft andererseits,

Fig. 9      ein Beispiel für eine gefilterte Reckkraftkurve bei einem Leerhub der Reckstange,

Fig. 10     ein Blockschaltbild zu Regelungszusammenhängen bei der Regelung einer Temperiervorrichtung inklusive einer Störgrößenkompensation,

Fig. 11     ein Blockschaltbild eines PT-n-Gliedes,

Fig. 12     eine schematische Darstellung einer Temperiervorrichtung zur Erläuterung regelungstechnischer Größen,

Fig. 13     ein Blockschaltbild zu einer vereinfachten Regelstrecke für eine Temperiervorrichtung, die Fig. 10 ohne Störgrößenkompensation entspricht, und

Fig. 14     eine perspektivische Seitenansicht einer Blasstation als Beispiel für eine Umformstation, bei der eine Reckstange von einem elektrischen Antrieb positioniert wird.

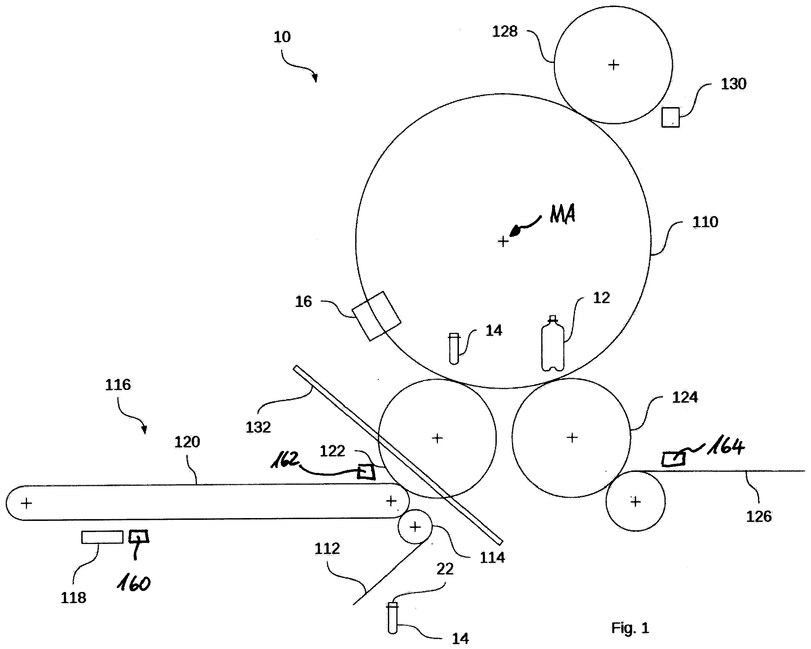

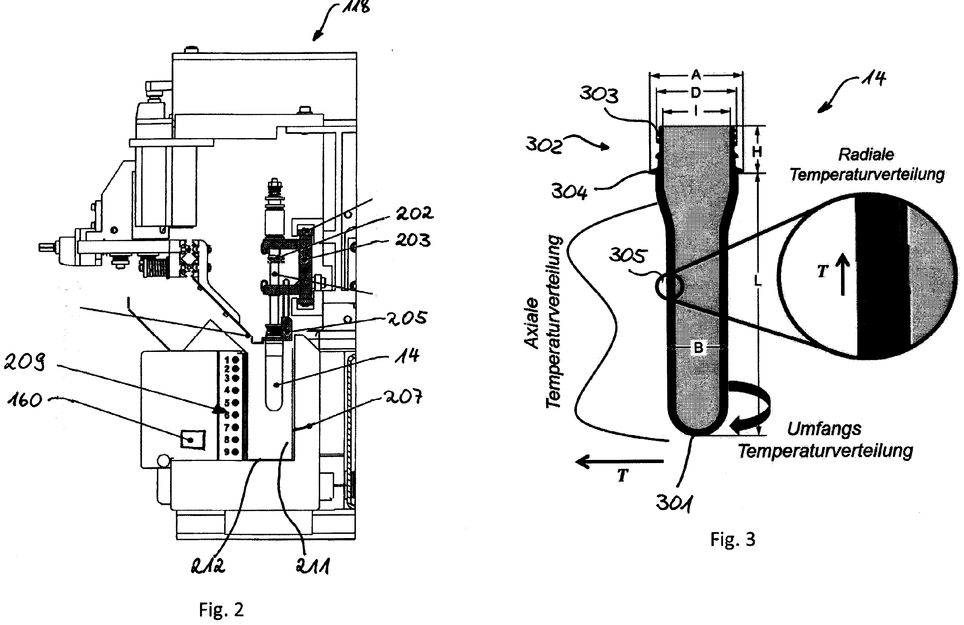

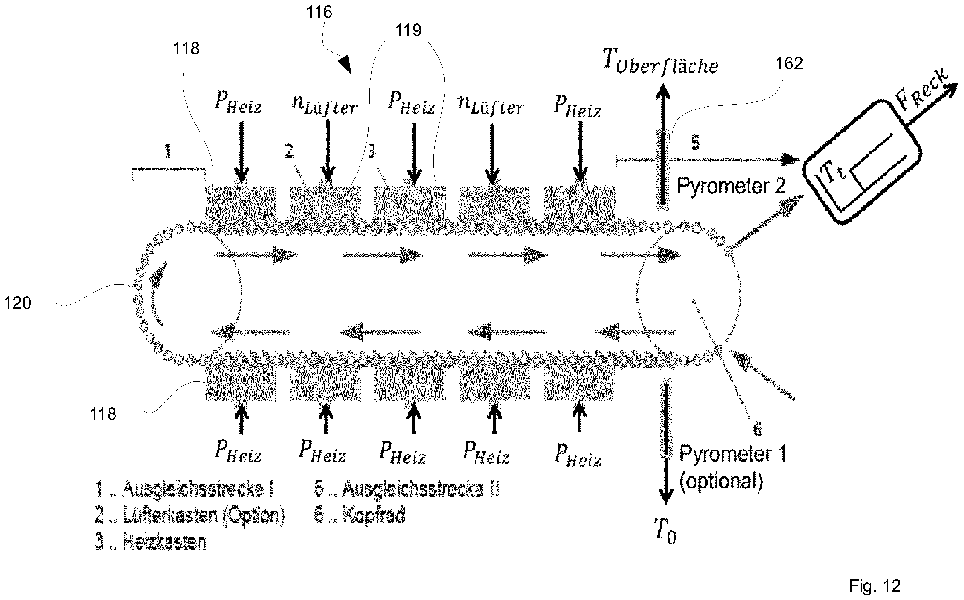

Der prinzipiell aus dem Stand der Technik bekannte Aufbau einer Umformmaschine 10 ist in Figur 1 dargestellt. Die Darstellung zeigt die bevorzugte Ausbildung einer solchen Umformmaschine 10 in der Art einer Rotationsmaschine mit einem mehrere Umformstationen 16 tragenden, rotierenden Arbeitsrad 110. Zur zeichnerischen Vereinfachung ist allerdings lediglich eine solche Umformstation 16 dargestellt. Von einer Zuführeinrichtung 112 werden schematisch dargestellte Vorformlinge 14, die auch als Preforms bezeichnet werden, unter Verwendung eines Übergaberades 114 kontinuierlich einer Temperiervorrichtung 116 zugeführt. Im Bereich der Temperiervorrichtung 116, die auch als Ofen bezeichnet wird und in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Temperiervorrichtung 116 ist beispielsweise mit Heizeinrichtungen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizeinrichtungen 118 eignen sich beispielsweise Heizkästen mit IR-Strahlern oder Licht emittierenden Dioden oder NIR-Strahlern. Da solche Temperiervorrichtungen in vielfältiger Art im Stand der Technik bekannt sind, und da die konstruktiven Einzelheiten der Heizeinrichtungen für die vorliegende Erfindung nicht wesentlich sind, kann auf eine über die Beschreibung zur Figur 2 und zur Figur 12 hinausgehende, detailliertere Beschreibung verzichtet und auf den Stand der Technik verwiesen werden, insbesondere auf den Stand der Technik zu Temperiervorrichtungen von Blas- und von Streckblasmaschinen und zu Temperiervorrichtungen von Form- und Füllmaschinen, die allesamt von dem Begriff Umformmaschinen umfasst sind.

Nach einer ausreichenden Temperaturkonditionierung werden die Vorformlinge 14 von einem Übergaberad 122 zu einem rotationsfähig angeordneten, d.h. um eine vertikale Maschinenachse MA umlaufend antreibbaren Arbeitsrad 110 bzw. an Umformstationen 16 übergeben, die an dem Arbeitsrad 110 umfangsverteilt angeordnet sind. Das Arbeitsrad 110 ist mit einer Mehrzahl solcher Umformstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als Druckmedium beim Formen dient. Bei Blasmaschinen erfolgt hingegen keine Befüllung auf diesem Arbeitsrad 110, sondern zu einem späteren Zeitpunkt auf einem Füllerrad mit Füllstationen.

Nach dem Formen und Füllen werden die fertig geformten und gefüllten Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Umformstation 16, die Expansion des Vorformlings 14 zu einem Behälter 12 inklusive Füllung mit einem Füllgut und ggf. inkl. Reckung, falls eine Reckstange vorgesehen ist, und die Entnahme des Behälters 12 aus der Umformstation 16. Zur Ausführung der vorliegenden Erfindung ist eine Reckeinrichtrung, z.B. eine Reckstange, vorgesehen.

Gemäß der Ausführungsform in Figur 1 ist weiterhin vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung des Entnahmerades 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Temperiervorrichtung 116 sind typischerweise eine Vielzahl von elektrischen und elektronischen Bauteilen angeordnet. Darüber hinaus sind die Heizeinrichtungen 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, sollte bevorzugt zur Vermeidung elektrischer Probleme dafür gesorgt werden, dass ein unbeabsichtigter Eintrag von Feuchtigkeit in den Bereich der Temperiervorrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Temperiervorrichtung 116 gelangen kann.

Eine Handhabung der Vorformlinge 14 und/oder der Behälter 12 erfolgt vorzugsweise unter Verwendung von Zangen und/oder den Mündungsabschnitt 22 wenigstens bereichsweise von innen oder von außen mit einer Haltekraft beaufschlagenden Klemm- oder Steckdornen. Solche Handhabungsmittel sind ebenfalls aus dem Stand der Technik hinlänglich bekannt.

Die Umformmaschine 10 ist zum Zwecke ihrer Steuerung bzw. zum Zwecke ihrer Regelung mit Messsensoren ausgestattet. So ist es zum Beispiel üblich, dass in der Temperiervorrichtung 116 ein Temperatursensor 160 angeordnet wird, um eine Temperatur der Temperiervorrichtung 116 messen zu können. Weiterhin ist es im Stand der Technik bekannt, dass auslaufseitig der im Uhrzeigersinn umlaufenden Transporteinrichtung 120 ein Temperatursensor 162 angeordnet ist, der zum Beispiel als Pyrometer ausgebildet ist und der zum Beispiel an daran vorbeilaufenden temperaturkonditionierten Vorformlingen 14 eine Oberflächentemperatur erfasst. Schließlich ist es im Stand der Technik auch bekannt, mit Messsensoren Messungen an fertigen Behältern 12 vorzunehmen. So kann zum Beispiel an der Ausgabestrecke 126 ein Wanddickenmesssensor 164 angeordnet sein, um die Wanddicke eines daran vorbeigeführten Behälters zu erfassen. Die vorgenannten Sensoren können dabei auch aus mehreren höhenversetzt angeordneten Sensoren ausgebildet sein, um zum Beispiel entlang der Vorformlingslängsachse eine Temperaturmessung durchzuführen oder um zum Beispiel entlang der Behälterlängsachse eine Wanddickenmessung auszuführen. Auch in der Temperiervorrichtung 116 können mehrere Temperatursensoren 160 angeordnet sein.

Die in Figur 1 exemplarisch dargestellte Heizeinrichtung 118 könnte zum Beispiel wie in Figur 2 detaillierter in einer schematischen Schnittansicht gezeigt aussehen. Solche Heizeinrichtungen werden auch als Heizkästen bezeichnet. In der Regel sind mehrere dieser Heizkästen 118 nebeneinanderstehend entlang der Heizstrecke angeordnet zur Ausbildung eines Heiztunnels, durch den die Vorformlinge 14 hindurchgeführt werden.

Der in Figur 2 in einer schematischen Schnittansicht dargestellte Heizkasten 118 weist mehrere Nahinfrarot-Strahler 209 auf, im dargestellten Ausführungsbeispiel sind neun Nahinfrarot-Strahler 209 in vertikaler Richtung übereinander angeordnet und jeder dieser Nahinfrarot-Strahler 209 definiert eine Heizebene. Diese NIR-Strahler 209 können bedarfsweise alle bei gleicher Leistung betrieben werden oder auch einzeln oder zu mehreren gruppiert bei unterschiedlichen Leistungen. Je nach axialer Erstreckung des Vorformlinges 14 können in vertikaler Richtung unten liegende Strahlerebenen auch abgeschaltet sein. Zur Erzielung eines Temperaturprofiles in den Vorformlingen 14 ist in der Regel erforderlich, dass Nahinfrarot-Strahler 209 auf unterschiedlichen Strahlerebenen mit unterschiedlicher Heizleistung betrieben werden.

Den Nahinfrarot-Strahlern 209 gegenüberliegend ist ein Gegenreflektor 207 angeordnet, der darauf auftreffende Heizstrahlung zurück in Richtung auf den Vorformling 14 und somit zurück in den Heiztunnel 211 reflektiert. Der Heiztunnel 211 ist nach unten abgeschlossen durch einen Bodenreflektor 212. Der Vorformling 14 ist mündungsseitig durch eine Stützringabschirmung 205 gegen Heizstrahlung geschützt, da der Mündungsbereich mit daran ausgebildetem Gewinde vor unnötiger Erwärmung geschützt werden soll. Die Stützringabschirmung 205 ist dabei an der Handhabungseinrichtung 203 angeordnet, die wie zu Figur 1 erläutert Teil einer umlaufenden Kette sein kann. Die Handhabungseinrichtung 203 weist weiterhin einen Klemmdorn 202 auf, der klemmend in den Mündungsabschnitt des Vorformlinges 14 eingreift. Solche Klemmdorne 202 und solche Handhabungseinrichtungen 203 sind aus dem Stand der Technik hinlänglich bekannt und bedürfen keiner weiteren Erläuterung. Auch der grundsätzliche Aufbau dieses vorstehend beschriebenen Heizkastens 118 ist aus dem Stand der Technik bekannt.

Der in Figur 1 prinzipienhaft dargestellte Temperatursensor 160 ist im Heizkasten 118 der Figur 2 ebenfalls dargestellt, wobei dieser Temperatursensor 160 in der Regel hinter einem Reflektor angeordnet wird, zum Beispiel hinter dem Rückreflektor 207. Dieser Temperatursensor 160 erfasst eine Temperatur des Heizkastens 118. Grundsätzlich wäre es auch möglich, eine Temperatur innerhalb des Heiztunnels 211 zu erfassen oder eine Temperaturmessung am Vorformling 14 innerhalb des Heiztunnels 211 vorzunehmen.

Figur 3 zeigt in einer Schnittansicht einen typischen Vorformling 14 mit einem geschlossenen Bodenbereich 301 und einem geöffneten Mündungsabschnitt 302. Im Bereich des Mündungsabschnittes 302 ist ein Außengewinde 303 sowie ein Stützring 304 ausgeformt. Nach erfolgter Temperaturkonditionierung ergibt sich in dem Vorformling 14 eine bestimmte Temperaturverteilung. So kann zum Beispiel durch eine entsprechende Beheizung in axialer Richtung des Vorformlinges 14 ein Temperaturprofil erzeugt werden, wie dies linksseitig des Vorformlinges 14 dargestellt ist. Es ist dort zu erkennen, dass im Bodenbereich und in einem Bereich unterhalb des Stützringes eine höhere Temperatur realisiert ist als in einem dazwischenliegenden Bereich. Es ist aber auch möglich, den Vorformling in axialer Richtung homogen aufzuheizen. Aus dem vergrößerten Abschnitt des Wandbereiches 305 ist ersichtlich, dass sich auch innerhalb der Vorformlingswand ein Temperaturverlauf einstellt oder gezielt einstellbar ist. Dies ist unter anderem dadurch bedingt, dass die Absorption der Heizstrahlung radial außen zu einer stärkeren Erwärmung führt als radial innen. Temperaturunterschiede in der Vorformlingswand heben sich zwar mit der Zeit durch thermische Ausgleichsprozesse auf. Diese Temperaturausgleichsprozesse sind allerdings in den typischerweise aus PET bestehenden Vorformlingen relativ langsam.

Zusätzlich kann der Vorformlinge 14 auch in Umfangsrichtung mit einem Temperaturprofil versehen werden. Dies ist zum Beispiel bekannt für Vorformlinge, die nachfolgend in unrunde Behälter umgeformt werden sollen, zum Beispiel in ovale Behälter.

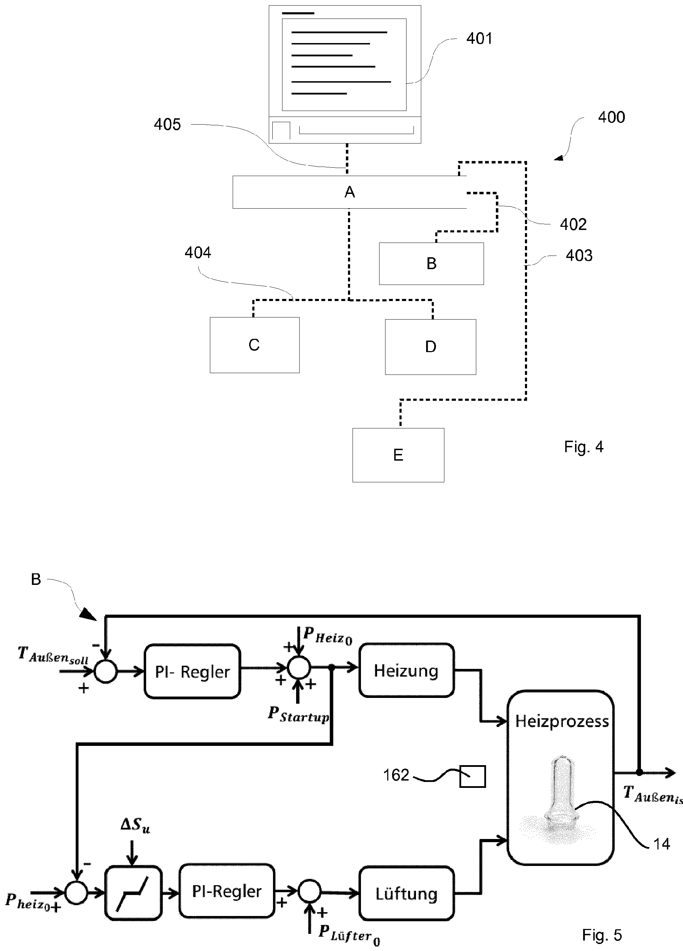

Figur 4 zeigt die schematische Darstellung einer möglichen modularen Steuerungsarchitektur einer Steuereinrichtung 400 für eine Umformmaschine 10. Mit dem Buchstaben A ist eine Mastersteuerung bezeichnet, Buchstabe B bezeichnet eine Steuereinrichtung für die Steuerung bzw. Regelung einer Temperiervorrichtung, Buchstabe C bezeichnet eine Steuerung für den Antrieb zum Beispiel des Arbeitsrades 110, Buchstabe D bezeichnet Sicherheitseinrichtungen, wie zum Beispiel Notstop-Schalter, und Buchstabe E bezeichnet zum Beispiel eine Steuerungseinrichtung für den Umformprozess, also zum Beispiel für den möglichen Antrieb einer Reckstange, für Schaltventile zum Zu- oder Abschalten eines Umformfluides etc.. Auf einem Display 401 können steuerungsrelevante Daten angezeigt werden und von der Mastersteuerung wird über eine Datenleitung 405 das Display 401 mit darzustellenden Werten versorgt. Das Display 401 kann auch als Eingabeeinheit fungieren und über diese Eingabeeinheit eingegebene Werte können über die Verbindungsleitung 405 an die Mastersteuerung A übergeben werden. Die weiteren Datenleitungen 402, 403 und 404 und Datenleitung 405 können zum Beispiel als Datenbus ausgeführt sein und dienen zum Beispiel der Übertragung von Daten zwischen der Mastersteuerung A und den weiteren Steuermodulen oder zwischen den Steuermodulen untereinander.

Figur 5 zeigt den schematischen Aufbau einer grundsätzlich im Stand der Technik bekannten Steuereinrichtung B für die Heizungsregelung, wobei als Führungswert die Oberflächentemperatur $T_{Außen}$ eines Vorformlinges gewählt ist. Die von dieser dargestellten Regelung geregelte Temperiervorrichtung arbeitet mit Heizeinrichtungen 118 und mit Kühleinrichtungen 119 in Form eines Lüfters. Die Regelung erhält als Arbeitspunkte eine Startheizleistung $P_{Heiz0}$ und eine Startlüfterleistung $P_{Lüfter0}$, da vorliegend zusätzlich zu Heizstrahlern eine Kühlung der Vorformlingsoberfläche vorgesehen ist. Die Regelung der Temperaturkonditionierung soll dabei anhand der Messung einer Oberflächentemperatur der Vorformlinge 14 erfolgen, und zu diesem Zwecke ist wie zu Figur 1 erläutert am Ende der Heizstrecke ein Pyrometer 162 angeordnet. Anhand der mit dem Pyrometer 162 gemessenen Oberflächentemperatur $T_{Außen,IST}$ der Vorformlinge 14 führt die Regelung die Heizleistung der Heizeinrichtungen 118 nach. Weiterhin kann vorgesehen sein, dass eine Umgebungstemperatur erfasst wird und auch diese Umgebungstemperatur in die Regelung der Temperiervorrichtung einfließt. Es ist im dargestellten Ausführungsbeispiel vorgesehen, dass ein Absinken der Heizleistung erfasst wird. Um ein zu starkes Absinken der Heizleistung zu verhindern wird bei Unterschreiten der Leistung □$S_u$ die Leistung der Oberflächenkühlung durch die Kühleinrichtungen 119 verändert. Bei Absinken der Heizleistung wird zum Beispiel die Leistung der Oberflächenkühlung so lange erhöht, bis der Heizungsregler ein Absinken der Oberflächentemperatur der Vorformlinge feststellt und die Heizleistung wieder erhöht.

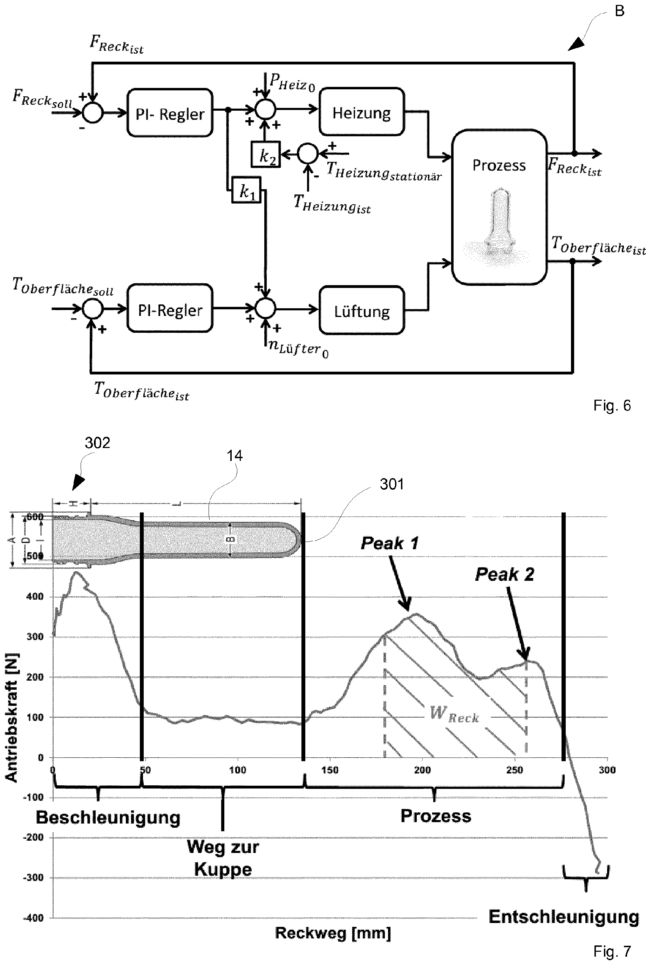

Figur 6 zeigt schematisch ein Beispiel einer erfindungsgemäßen Heizungssteuerung mit einer Steuerungseinrichtung B für die Heizungsregelung mit zwei Führungsgrößen und mit zwei Stellgrößen. Als erste Führungsgröße wird eine Größe $F_{Reck,IST}/F_{Reck,SOLL}$ gewählt, nämlich die Reckkraft oder eine Größe, aus der die Reckkraft ableitbar ist, oder eine daraus ermittelte Größe, z.B. die Verformungsarbeit. Als zweite Führungsgröße wird eine Größe $T_{Oberfläche,IST}/T_{Oberfläche,SOLL}$ gewählt, also die Oberflächentemperatur eines Vorformlings. Als Stellgrößen werden zum einen die Heizleistung $P_{Heiz}$ der Heizeinrichtungen 118 der Temperiervorrichtung gewählt und zum anderen die Kühlleistung $P_{Lüfter}$ der Kühleinrichtungen 119. Zur Erhöhung der Robustheit der Regelung ist die in Figur 6 dargestellte Regelungsarchitektur als dezentraler Mehrgrößenregler ausgelegt.

Zur Verbesserung des instationären Verhaltens der Temperiervorrichtung ist gemäß Figur 6 eine Störgrößen-aufschaltung $k_2$ in den Regler integriert. Diese addiert in Abhängigkeit von der Differenz zwischen der IST-Ofentemperatur $T_{Ofen,IST}$ und der stationären Ofentemperatur $T_{Ofen,stationär}$, also der Ofentemperatur nach Erreichen des thermischen Gleichgewichtszustandes nach einer bestimmten Betriebsdauer, mit einem Faktor eine zusätzliche prozentuale Leistung zur Gleichgewichtsheizleistung $P_{Heiz0}$. $P_{Heiz0}$ stellt einen Basiswert dar. Vor Erreichen des Gleichgewichtszustandes der Temperiervorrichtung bzw. des Ofens ergibt sich also eine höhere Heizleistung, um die Vorformlinge trotzdem auf die gewünschte Temperatur zu bringen. Das in Figur 6 gezeigte Blockschaltbild sieht weiterhin einen Entkopplungszweig $k_1$ vor, um innere Kopplungen abzuschwächen. Im dargestellten Ausführungsbeispiel ist die Führungsgröße $F_{Reck,IST}/F_{Reck,SOLL}$ gegenüber der Führungsgröße $F_{Oberfläche,IST}/F_{Oberfläche,SOLL}$ priorisiert. Die Störgrößenaufschaltung ist in dem Blockschaltbild als Störung $k_2$ dargestellt, die abhängig gemacht wird von der Differenz zwischen der Temperatur der Temperiervorrichtung $T_{Ofen,stationär}$ bei Vorliegen von Gleichgewichtsbedingungen gegenüber der Ist-Temperatur der Temperiervorrichtung $T_{Ofen,IST}$. Je größer diese Temperaturdifferenz ist desto größer ist der Störgrößeneffekt auszubilden und desto höher sollte der Faktor gewählt werden zur Erhöhung der Heizleistung gegenüber der Basisheizleistung.

Die Heizleistung $P_{Heiz0}$ sowie die Lüfterleistung $P_{Lüfter0}$ stellen eingestellte Leistungen für diese Stellglieder dar und beschreiben einen Arbeitspunkt bzw. einen Basispunkt. Diese Leistungen werden in Abhängigkeit der Führungsgrößen verändert.

Erfindungsgemäß ist eine Regelung anhand einer messtechnisch erfassten Größe vorgesehen, aus der eine Reckkraft ableitbar ist oder die die Reckkraft selber ist. Es kann auch eine Regelung nach daraus ermittelten Größen erfolgen, z.B. anhand der Reckarbeit. Deshalb soll nachfolgend anhand eines Beispiels erläutert werden, wie diese Größe für die Regelung jeweils zur Verfügung gestellt werden kann.

Fig. 7 zeigt eine messtechnisch erfasste Reckkraftkurve, die aus der Stromaufnahme des Reckstangenantriebs, nämlich eines Servomotors, abgeleitet wurde. Aufgetragen ist die Reckkraft über dem Reckweg der Reckstange, wobei bis zum Erreichen der Vorformlingskuppe von der Reckstange noch keine Reckkraft auf den Vorformling ausgeübt wird. Auf diesem Wegabschnitt findet also noch keine Reckung statt. Aufgrund der Massenträgheit des Motorankers des Servomotors, des Getriebes sowie der Reckstange werden im dargestellten Kraftverlauf auch die Be- und Entschleunigung sichtbar. Zu Beginn des Reckweges wird die Masse des Recksystems beschleunigt. Hat die Reckstange konstante Geschwindigkeit erreicht, im dargestellten Fall bei etwa 50 mm, werden Reibkräfte sichtbar. Diese resultieren zum einen aus dem Getriebe des Antriebs, zum anderen aus den Reibkräften der Reckstangenoberfläche an Dichtungen. Diese dichten den mit Druck beaufschlagten Teil der Umformstation von der Umgebung ab. Kontaktiert die Reckstange die Kuppe, steigt die Reckkraft an. In Figur 7 erfolgt dies bei einem Reckweg von etwa 140 mm. Nachdem das P1-Ventil geschaltet wurde, fällt die Reckkraft wieder ab, da der Innendruck im Vorformling ebenfalls eine axiale Kraft erzeugt, erkennbar am Reckkraftabfall bei einem Reckweg knapp unterhalb von 200 mm am Punkt Peak1. Mit Fortschreiten der Behälterblasenentwicklung tritt die Reckverfestigung des Vorformlingsmaterials als Ansteigen der Antriebskraftkurve in Erscheinung hin zu einem zweiten lokalen Maximum in der Reckkraftkurve bei Peak2. Um nicht mit der Bodenform der Umformstation zu kollidieren, muss die Reckstange zum Ende der P1-Phase entschleunigen. Die dazu nötige Bremskraft überlagert sich mit der Kraft, die für die eigentliche Reckung aufzuwenden ist.

Für die Verwendung als Führungswert eignen sich z.B. der erste und/oder der zweite Peak (Peak1 und/oder Peak2) oder auch ein Integral über einen Bereich der Reckkraftkurve, z.B. ein Bereich im Wesentlichen zwischen diesen beiden Peaks. Ein solches Integral stellt eine Reckarbeit dar. Der Umformprozess bei der Umformung eines Vorformlings in einen Behälter ist vereinfacht die Einbringung von Umformenergie in einen Vorformling zur Herstellung eines Behälters. Diese Umformenergie teilt sich in thermische Energie (Temperierung des Vorformlings) und in mechanische Energie (radiale und axiale Expansion des Vorformlings) auf. Bringt man mehr thermische Energie ein, ist weniger mechanische Arbeit zur Umformung nötig.

Die mechanische Umformarbeit setzt sich zusammen aus der Beaufschlagung des Vorformlings mit einem Formfluid mit einem bestimmten Formdruck bzw. mit einem bestimmten Volumenstrom und aus der durch die Reckstange aufgebrachte Kraft. Die von der Reckstange aufgewandte Kraft kann wie oben ausgeführt durch messtechnische Erfassung des Motorstroms ermittelt werden.

Nachfolgend dargestellt und erläutert wird beispielhaft die Eignung des zweiten Peaks als Führungswert. Die in Figur 8 zusammengestellten Messergebnisse wurden erzielt bei Untersuchungen mit diesem zweiten Peaks als Führungswert. Untersucht wurde z.B. der Zusammenhang des zweiten Peaks mit der Heizleistung bei der Temperaturkonditionierung, also die Änderung im Peak2 bei veränderter Heizleistung. Zum Vergleich ist in Figur 8 auch angegeben, wie die Oberflächentemperatur des Vorformlings von der geänderten Heizleistung abhängt. In Figur 8 zeigt sich bei diesem Vergleich, dass die Reckkraft mit höherer Genauigkeit als die bisher verwendete, von einem Pyrometer erfasste Oberflächentemperatur die in den Vorformling eingetragene Heizleistung, also den thermisch eingebrachten Energiegehalt, widerspiegelt. Mit steigender Oberflächentemperatur bzw. mit steigender Heizleistung sinkt erwartungsgemäß die Reckkraft. Während die Reckkraft bei der durchgeführten Änderung in der Heizleistung um 42% (um 55N) sinkt, steigt die Oberflächentemperatur bei der gleichen Änderung nur um 3,5% (um 3,8°C). Die Reckkraft erweist sich somit als sensibler hinsichtlich der Heizleistung im Vergleich zur Oberflächentemperatur.

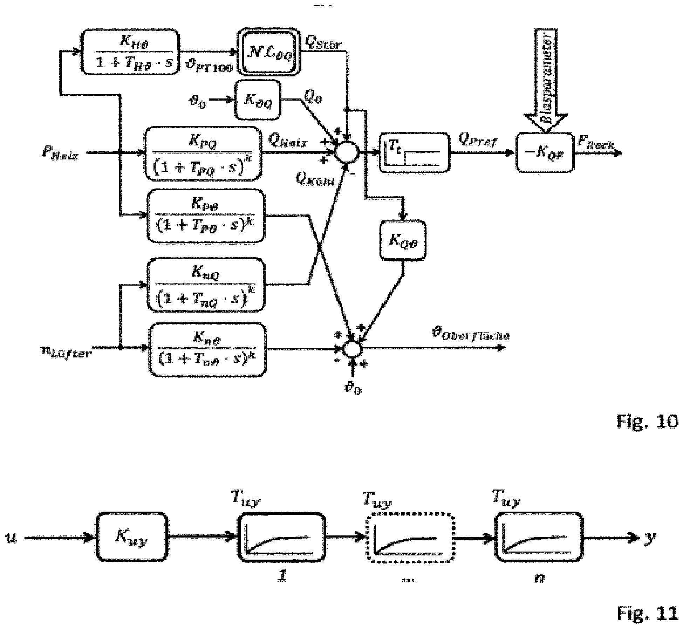

Figur 10 zeigt ein Blockschaltbild zur Veranschaulichung wesentlicher regelungstheoretischer Regelungszusammenhänge im Temperaturkonditionierungsprozess. Dabei wird bewusst versucht, die Führungsgrößen $F_{Reck}$ sowie $T_{Oberfläche}$ getrennt zu beschreiben. Um Verwechselungen zwischen Zeitkonstanten und Temperaturen zu vermeiden, wird für die Temperaturen im Folgenden $\vartheta$ verwendet. Der Masterwert der Heizungsleistung $P_{Heiz}$ sowie die Drehzahl des Lüfters $n_{Lüfter}$ (in % der Maximaldrehzahl) dienen als Eingänge in das System. Mittels des Pyrometers 162 am Ende der Heizstrecke wird die Oberflächentemperatur des Preforms $\vartheta_{Oberfläche}$ gemessen. Im zeitlich nachfolgenden Blasprozess wird eine Reckkraft $F_{Reck}$ gemessen (oder eine Größe, aus der die Reckkraft ableitbar ist). Sie resultiert aus der nach dem Temperaturkonditionierungsprozess enthaltenen Energiemenge im Preform $Q_{Pref}$ und dem Faktor $K_{QF}$. Dieser Faktor hängt von den Einstellungen der Blasparameter ab.

Erhöht man beispielsweise den Blasdruck, führt die Reckstange die Blase weniger. Somit wird sie auch unsensibler gegenüber Schwankungen im Energiegehalt im Vorformling infolge der Temperaturkonditionierung.

Die Zeit zwischen Verlassen der Heizung und Messung der Reckkraft wird aus Sicht des Energiegehalts als Totzeit $T_t$ beschrieben. Zwar tritt während dieser Zeit ein Energieverlust durch Konvektion auf, jedoch ändert sich der Energieinhalt nur unwesentlich und kann regelungstechnisch daher auch vernachlässigt werden.

Die im Preform enthaltene Energie $Q_{Pref}$ wird maßgeblich durch die von der Temperiervorrichtung eingetragene Energie $Q_{Heiz}$ bestimmt. Durch die Oberflächenkühlung wird die Energie $Q_{Kühl}$ entfernt. Ist die Temperiervorrichtung in einem stationären Betriebszustand, der nach einer Aufheizzeit erreicht wird, sind umgebende Bauteile erwärmt und emittieren eine langwellige Sekundärstrahlung, welche die Störenergie $Q_{Stör}$ in den Preform einträgt. Diese Störenergie wirkt sich durch den Faktor $K_{Q,\vartheta}$ auch auf die Oberflächentemperatur aus. Da der Prozess auf den stationären Zustand der Temperiervorrichtung eingestellt ist, führt ein Fehlen dieser Energie zu Abweichungen im Prozess, da der Preform nicht die für den Blasprozess nötige Gesamtenergie besitzt. Wie viel Sekundärstrahlung emittiert wird, lässt sich durch die Temperatur des Reflektorblechs $\vartheta_{PT100}$ abschätzen. Da jedoch der Zusammenhang zwischen Energie $Q_{Stör}$ und $\vartheta_{PT100}$ nicht genau bekannt ist, wird er durch den nichtlinearen Zusammenhang $NL_{\vartheta Q}$ beschrieben. Die Temperatur $\vartheta_{PT100}$ ergibt sich mit einem PT-1 Verhalten in Abhängigkeit von der Heizleistung $P_{Heiz}$. Durch die gute Absorption der langwelligen Sekundärstrahlung nimmt diese Einfluss auf die Oberflächentemperatur des Preforms. Dies wird mittels des Faktors $K_{Q,\vartheta}$ abgebildet. Er beschreibt, wie sich durch die Störenergie auch die Oberflächentemperatur verändert.

Eine weitere Störung ist die Eingangstemperatur des Preforms $\vartheta_0$. Diese kann sich je nach Lagerung des Preforms ändern. Steigt sie, so erhöhen sich ebenfalls die Oberflächentemperatur und der Energiegehalt.

Bei einer Erhöhung der Heizleistung erhält der im letzten Heizmodul befindliche Preform aufgrund der kurzen verbleibenden Verweildauer in der Temperiervorrichtung wenig zusätzliche Energie. Ein Preform, der zum Zeitpunkt der Leistungserhöhung gerade am Beginn der Temperiervorrichtung ist, wird hingegen bereits den vollen zusätzlichen Energiegehalt aufweisen. Da jeder Preform zwischen diesen beiden Fällen als Energiespeicher betrachtet werden kann, ist ersichtlich, dass sich ein Übertragungsverhalten höherer Ordnung ohne Überschwingen ergibt.

Da diese Betrachtung auch für die Oberflächenkühlung durchgeführt werden kann, wird die Hauptdynamik der Temperiervorrichtung durch 4 PT-n Glieder mit Grad $k$ dargestellt. Figur 11 zeigt ein Blockschaltbild eines solchen PT-n-Gliedes. Ein PT-n besteht dabei aus einer Reihenschaltung von $n$ PT-1 Gliedern mit der Zeitkonstante $T_{uy}$. Das Übertragungsglied besitzt dabei eine Verstärkung $K_{uy}$. Die einzelnen PT-n Glieder sind nach P-kanonischer Form gekoppelt.

Figur 12 veranschaulicht die Anordnung von Heizeinrichtungen 118 und von Kühleinrichtungen 119 entlang der Heizstrecke 120 und deren Einbindung in die Regelung der Temperiervorrichtung 116 anhand der angegeben Parameter für Heizleistungen und für Lüfterdrehzahlen. Aus dieser Übersicht wird beispielhaft deutlich, wo und wann welcher Parameter Einfluss nimmt auf die temperaturkonditionierende Wirkung der Temperiervorrichtung. Qualitativ kann gesagt werden, dass das Zeitverhalten der Oberflächenkühlung immer etwas schneller sein wird als das Zeitverhalten der Heizmodule. Aufgrund der kürzeren Strecke klingt die Dynamik nach Stellgrößenänderung der Oberflächenkühlung schneller ab als die der Heizstrecke. Die Zeit, die ein Lüfter bzw. ein Heizmodul nach Änderung der Drehzahl bzw. der Heizleistung benötigt, um diese einzustellen, wird als vernachlässigbar angenommen.

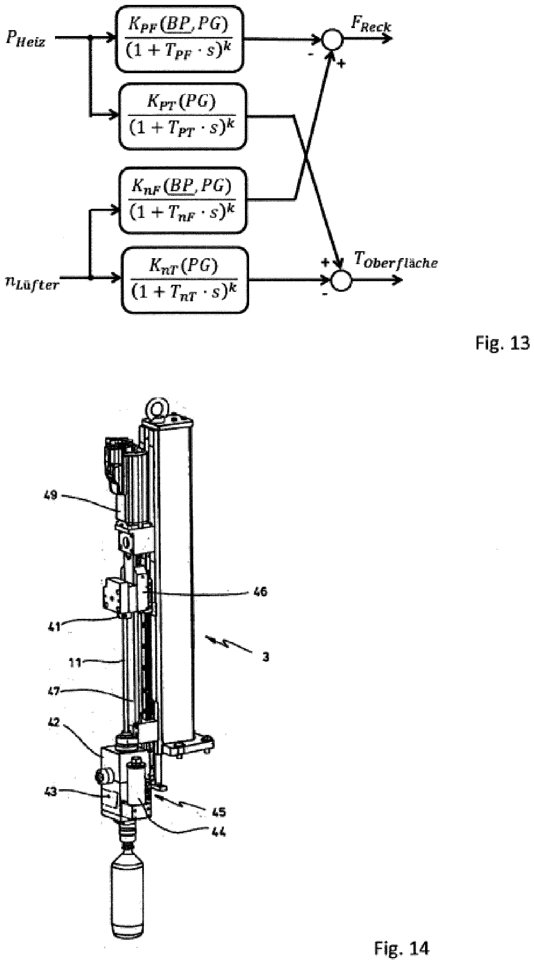

Ein für den Regler der Temperiervorrichtung geeignetes Modell der Regelstrecke ist zu Fig. 10 beschrieben worden. Einen Basisregler ohne Störgrößenkompensation zeigt Figur 13, das heißt die zu Figur 10 genannten Störgrößen werden hier vernachlässigt. Weiterhin werden die Totzeit an der Übergabe $T_t$ sowie der Faktor $K_{QF}$ mittels der vier Übertragungsglieder in P-Kanonischer Form abgebildet. Für die Wirkung der Heizleistung und der Oberflächenkühlung werden die Faktoren $K_{PF}(\underline{BP})$ und $K_{nF}(\underline{BP})$ eingeführt.

Sie hängen vom Blasparametervektor $\underline{BP}$ ab. Sind die Blasparameter konstant, sind somit auch die Faktoren konstant.

Da die Temperaturen und Kräfte vom Energiezustand des Preforms abhängen, lässt sich zusätzlich feststellen, dass die Verstärkungen $K_{uy}$ in Figur 13 von der Verweilzeit in der Temperiervorrichtung abhängen. Diese wird durch die Produktionsgeschwindigkeit $PG$ bestimmt. Wird sie vermindert, erhöhen sich alle Faktoren, da sich der Preform länger in jedem Modul aufhält. Es kann in regelungstechnisch guter Näherung z.B. davon ausgegangen werden, dass dieser Einfluss um den Arbeitspunkt linear ist.

Der Basisregler soll als Führungswerte die Oberflächentemperatur sowie die Reckkraft regeln. Stellglieder bleiben weiterhin die Heizeinrichtungen sowie die Oberflächenkühlung. Die Verwendung eines dezentralen Reglers ermöglicht eine einfache Implementierung.

Da die Reckkraft eine bessere Korrelation zur Behälterqualität aufweist als die Oberflächentemperatur, wird sie bevorzugt als Stellgröße für die Temperiervorrichtung verwendet.

Es ist mit den Führungsgrößen Reckkraft und Oberflächentemperatur indirekt möglich, das radiale Temperaturprofil im Preform vorzugeben. Bei konstant gehaltenem Energiegehalt (Reckkraft) muss bei Senkung der Oberflächentemperatur die Temperatur im Inneren des Preforms ansteigen. Mit dieser Wirkungsweise des Reglers lässt sich somit die Innentemperatur indirekt vorgeben bzw. halten.

In Figur 6 ist der zu Figur 10 beschriebene Regelkreis als Blockschaltbild gezeigt. Da die Temperiervorrichtung auch die Oberflächentemperatur stark beeinflusst, wird eine statische Entkopplung mit $k_1$ vorgesehen. Ein Entkopplungszweig von Oberflächentemperatur zur Temperiervorrichtung wird vermieden. Zwar wirkt sich die Änderung der Oberflächentemperatur auf die Reckkraft aus, die Aussagekraft der Oberflächentemperatur über die Qualität der Behälter ist jedoch geringer. Daher sollten Stellaktionen der Oberflächenkühlung nicht direkt auf die Heizleistung übertragen werden.

Als Führungsgrößen können z.B. der erste oder zweite Peak sowie die Reckarbeit gewählt werden. Da alle drei Größen den Energiegehalt im Preform nach der Temperaturkonditionierung beschreiben, sind bei den vorstehenden Erläuterungen unter dem Begriff "Reckkraft" bzw. $F_{Reck}$ alle drei möglichen Führungsgrößen beschrieben. Als bevorzugt wird die Reckarbeit als Führungsgröße angesehen, da sie den ganzen Prozessablauf bei der Umformung berücksichtigt.

Um den instationären Zustand der Temperiervorrichtung, also den Zustand vor Erreichen eines thermischen Gleichgewichts, näherungsweise zu kompensieren, wird die Abweichung von der bereits bekannten, stationären Temperatur mit dem Faktor $k_2$ als Leistung auf die Temperiervorrichtung aufgeschaltet. So kann mittels empirischer Einstellung eine Verbesserung des Anfahrverhaltens auch mit dem zu Figur 13 erläuterten Basisregler erreicht werden.

$P_{Heiz0}$ sowie $n_{Lüfter0}$ stellen die im Rezept eingestellte Leistungen für die Stellglieder dar und beschreiben daher den Arbeitspunkt. Die Vorzeichen bei der Differenzbildung sind im Vergleich zum Standardregelkreis vertauscht. Dies resultiert aus den unten dargestellten Zusammenhängen. So mindert eine höhere Heizleistung die Reckkraft, und ein größerer Luftstrom kühlt die Oberfläche stärker.

$$\varDelta Heizleistung \sim - \varDelta Reckkraft$$

$$\varDelta Luftstrom \sim - \Delta T_{Oberfläche}$$

Da sich die wesentlichen Störfaktoren wie Umgebungstemperatur oder Verschmutzung der Temperiervorrichtung nur sehr langsam ändern, resultieren daraus geringe dynamische Anforderungen an den Regler. Priorität hat die stationäre Genauigkeit des Prozesses und somit eine konstante Behälterqualität im Verlauf der Behälterproduktion.

Um statische Genauigkeit zu erreichen, werden aufgrund der nicht integrierenden Eigenschaft der Hauptregelstrecken I-Anteile in beiden Reglern vorgesehen. Um zusätzlich eine bessere Dynamik des geschlossenen Kreises zu erhalten, werden PI-Regler verwendet. Von der Verwendung eines PID- Reglers wird abgesehen, da der D-Anteil aufgrund des Prozessrauschens sehr klein gewählt werden kann, um den Regelkreis nicht ins Schwingen zu bringen.

Nachfolgend werden einige Hauptfunktionen des Reglers beschrieben, z.B. wie die Führungsgröße Reckkraft generiert werden kann.

Es werden beim Start des Reckens die Reckkraft, der Reckweg sowie der Flascheninnendruck aufgezeichnet. Nach Beenden des Prozesses werden diese Messreihen mittels einer OPC-Schnittstelle an einen Rechner zur Visualisierung gesendet. Dieser bereitet die Daten z.B. für den Export als CSV-Datei auf. Somit kann die Kurve im Nachgang manuell ausgewertet werden. Für den beschriebenen Regler ist jedoch die Echtzeitauswertung der Kurve in Form eines Führungswertes nötig.

Um die Reckkraft zu ermitteln, wird vom Reckstangenantrieb jeweils der Effektivwert des Stroms der letzten Millisekunde ausgegeben. Dieser wird auf einen antriebsinternen FPGA errechnet, welcher auch die Positionsregelung mittels einer Kaskadenregelung mit Führungsgrößengenerator sicherstellt. Bei einer Abtastrate von 1ms entsteht somit kein großer Informationsverlust, da durch Effektivwertbildung der letzten Millisekunde der gesamte Zeitbereich erfasst wird. Durch die motorinterne Effektivwertbildung wird durch den Stromrichter verursachtes Rauschen bereits herausgefiltert. Jedoch unterliegt die generierte Reckkraftkurve noch einem erheblichen Rauschanteil. Daher wird als erster, wenngleich optionaler Schritt eine Filterung mit einem diskreten PT1 Filter vorgesehen.

Wie zu Figur 7 erläutert, lassen sich verschiedene Bereiche in der Reckkraftkurve regelungstechnisch ausnutzen. Relevant ist aber auch der Bereich, in dem die Reibung auftritt. Als mögliche Führungswerte für den reckkraftbasierten Teil des Reglers sind die beiden Peaks sowie die Reckarbeit besonders relevant. Diese Werte werden in bestimmten Bereichen gesucht bzw. ermittelt. Die Bereiche, in denen diese ermittelt werden, werden z.B. abhängig vom Reckweg eingestellt.

```
┌──────────────────┐   ┌──────────────────┐   ┌──────────────────┐   ┌──────────────────┐
│  Auslesebereiche │ ▶ │   Reckkraftkurve │ ▶ │ Reibkraft ermitteln│ ▶ │    Werte im      │
│  aus Weg ermitteln│   │      filtern     │   │   und abziehen    │   │ jeweiligen Bereich│
│                  │   │                  │   │                  │   │     auslesen     │
└──────────────────┘   └──────────────────┘   └──────────────────┘   └──────────────────┘
```

Die vorstehende Abbildung zeigt den prinzipiellen Ablauf eines beispielhaften Algorithmus. Zunächst wird identifiziert, in welchen Bereichen der Daten die zu ermittelnden Werte bzw. die Reibung liegen. Nachfolgend wird das Rauschen mittels des diskreten PT1-Filters gemindert. Nun wird die mittlere Reibkraft ermittelt. Diese tritt nach dem Beschleunigen der Reckstange bei der konstanten Fahrt bis zum Auftreffen auf die Kuppe des Preforms auf. Diese Kraft wird als Offset von der Kurve abgezogen, da sie aus Reibungsverlusten resultiert. Nun erfolgt die Ermittlung der Maxima sowie des Reckkraftintegrals. Um für die jeweiligen Größen Bereiche in der Reckkraftkraftkurve vorzugeben, wird der Weg der Reckstange verwendet. Dieser wird ebenfalls mit gleicher Auflösung wie die Reckkraft aufgezeichnet. Dieser Weg wird als x-Achse der Reckkraftkurve genutzt, um festzulegen in welchem Bereich die Reibkraft auftritt, die Peaks liegen und die Reckarbeit ermittelt werden soll. Die Bereiche können sich dabei überschneiden.

Der Algorithmus durchläuft das Array, in dem der Weg aufgezeichnet ist, und ermittelt den Index der jeweiligen Wegbereichsgrenzen. Nachfolgend wird die Reckkraftkurve Wert für Wert durchlaufen. Liegt der Wert zwischen den Grenzen, werden für die Peaks der maximale Ausschlag (in positive oder negative Richtung) und die Reckarbeit ermittelt.

Die Bereiche können z.B. manuell eingestellt werden oder es kann auch eine automatisierte Bestimmung der Positionen der Peaks erfolgen und daraus Bereiche bestimmt werden. Alternative Methoden für die Festlegung der Bereiche sind möglich.

Nachfolgend werden alle ermittelten Werte der Funktion ausgegeben. Somit können dann entweder der erste oder zweite Prozesspeak sowie die Reckarbeit als Führungsgröße "Reckkraft" mit dem Eingang des Reglers verbunden werden. Dadurch kann abhängig vom Prozess der Wert gewählt werden, welcher die Qualität der Flasche am besten widerspiegelt. Optional kann auch nur einer dieser Werte ausgegeben und als Führungsgröße verwendet werden, z.B. nur die Reckarbeit.

Es ist möglich, eine Reckkraftkurve als Referenzkurve zu definieren. Diese Referenzkurve liegt z.B. in gespeicherter Form vor und wird z.B. von der aktuell erfassten Kurve abgezogen. Um Einfluss von Phasenversatz durch den Filter zu eliminieren, wird die Referenzkurve z.B. vor Subtraktion von der aktuellen Kurve mit der gleichen Filterkonstante gefiltert. Weiterhin bleibt so die resultierende Kurve ebenfalls rauschfrei. Ist der Prozess bzw. die Reckkraftkurve identisch zur Referenzkurve, wird als Wert für Peak 1 und Peak 2 sowie für die Reckarbeit der Wert 0 ausgegeben. Somit ist es bei Verwendung der Referenzkurve nicht nötig, explizit einen Sollwert für die Reckkraft vorzugeben.

Eine Änderung des Blasdruckes führt zu einer Veränderung der Reckkraft. Für eine stabile Regelung ist es daher vorteilhaft, wenn der Regler bei Änderung des Blasdrucks abgeschaltet und die Einstellungen der Temperiervorrichtung eingefroren werden. Geht man davon aus, dass sich in der Zeit der Abschaltung die Temperierung des Preforms nicht verändert hat, kann nach der Druckänderung der Ist-Wert für die Reckkraft als neuer Sollwert übernommen und die Regelung wieder eingeschaltet werden. Gleiches gilt für die Änderung eines anderen Blasparameters.

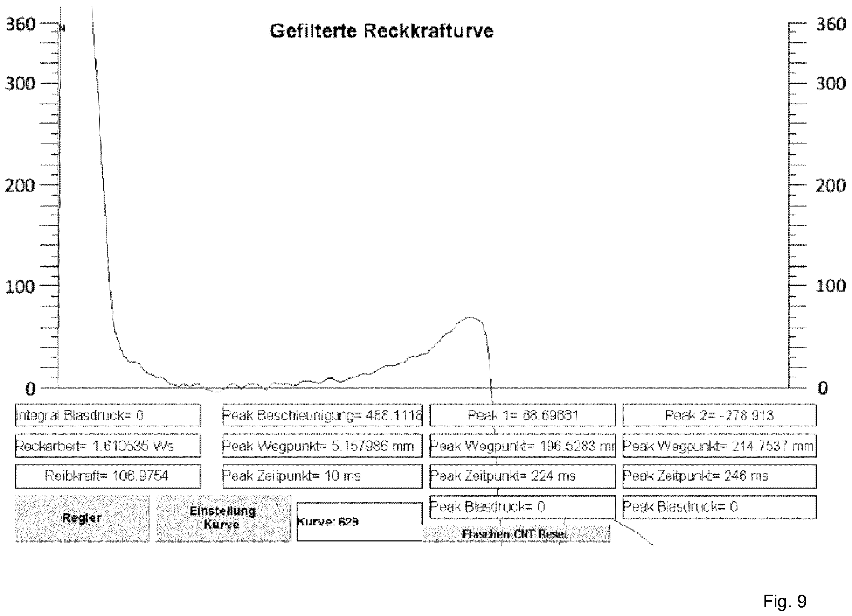

Fig. 9 zeigt die Reckkraftkurve eines Leerhubes einer Reckstange. Der Auslesealgorithmus hat bereits die Reibkraft während der konstanten Fahrt abgezogen. Jedoch verbleibt eine ansteigende Reibkraft auf der Wegstrecke, auf welcher normalerweise der Reckprozess stattfindet (siehe ansteigende Kraft in Fig. 9). Da die Stationen unterschiedlich schwergängig sind, schwankt der gemessene Wert für die Reckarbeit. Um dieses Verhalten zu vermeiden, können Leerhübe zur Referenzierung des Messsystems Reckantrieb verwendet werden. Im Auslesealgorithmus kann implementiert werden, eine Referenzkurve von einer aktuellen Reckkraftkurve abzuziehen. Diese Funktionalität kann genutzt werden, um die Leerhubkurve der jeweiligen Station von der Reckkraftkurve abzuziehen.

Fig. 14 zeigt eine Blasstation 3 bei einer perspektivischen Blickrichtung von vorne. Insbesondere ist aus dieser Darstellung erkennbar, dass die Reckstange 11 von einem Reckstangenträger 41 gehalten ist. Eine Umformstation, die gleichzeitig einen Vorformling umformt und füllt, könnte jedenfalls bezüglich der Reckstange 11 und des Reckstangenantriebes 49 in gleicher Weise ausgeführt sein.

Fig. 14 zeigt ebenfalls die Anordnung eines Pneumatikblockes 46 zur Blasdruckversorgung der Blasstation 3. Der Pneumatikblock 42 ist mit Hochdruckventilen 43 ausgestattet, die über Anschlüsse 44 an eine oder mehrere Druckversorgungen angeschlossen werden können. Nach einer Blasformung der Behälter 12 wird in eine Umgebung abzuleitende Blasluft wird über den Pneumatikblock 42 zunächst einem Schalldämpfer 45 zugeführt.

Eine typische Durchführung des Blasvorganges erfolgt in der Weise, dass nach einem Einsetzen des Vorformlings 14 in die Blasform 4 eine Verriegelung der Blasstation 3 erfolgt und zunächst die Reckstange 11 in den Vorformling 14 bei gleichzeitiger Blasdruckunterstützung derart hineingefahren wird, dass der Vorformling 14 durch die axiale Reckung nicht auf die Reckstange 11 radial aufschrumpft. In dieser Phase wird ein Blasdruck P1 zugeführt. Nach der vollständigen Durchführung des Reckvorganges erfolgt durch Beaufschlagung mit einem höheren Blasdruck P2 die vollständige Expansion der Behälterblase in die Endkontur des Behälters 12. Der maximale Innendruck P2 wird so lange aufrechterhalten, bis der Behälter 12 durch Abkühlung eine ausreichende Formstabilität erreicht hat. Nach dem Erreichen dieser Formstabilität wird die Blasdruckzufuhr abgeschaltet und die Reckstange 11 wird wieder aus der Blasform 4 und somit aus dem geblasenen Behälter 12 zurückgezogen.

Fig. 14 veranschaulicht ebenfalls, dass der Reckstangenträger 41 mit einem Kopplungselement 46 verbunden ist, das mindestens bereichsweise hinter einer Abdeckung 47 geführt ist. Das Kopplungselement 46 ist z.B. unter Verwendung einer in Fig. 14 nicht erkennbaren Gewindestange von einem Servomotor 49 positionierbar. Die Anordnung der Gewindestange, die mechanische Positionierung des Pneumatikblockes 42 und weitere Details werden z.B. in der EP 2117806 B1 zu den dortigen Figuren 5 und 6 erläutert.

Die dort gezeigte Gewindestange ist über eine Kupplung mit einer Motorwelle des Servomotors 49 verbunden. Beim dort dargestellten Ausführungsbeispiel erstrecken sich die Motorwelle und die Gewindestange entlang einer gemeinsamen Längsachse, so dass die Gewindestange als Verlängerung der Motorwelle angeordnet ist. Hierdurch wird insbesondere eine getriebelose Verbindung der Motorwelle mit der Gewindestange unterstützt.

Die Kopplung des Servomotors 49 über eine Gewindestange, ein Kopplungselement 46 und den Reckstangenträger 41 mit der Reckstange 11 stellt ein gegenüber äußeren Belastungen starres und dennoch hoch dynamisches System bereit.

Aus einer messtechnischen Erfassung des Motorstromes des Servomotors 49 kann in einfacher Weise auf eine aktuelle Reckkraft zurückgeschlossen werden. In Abhängigkeit von der durch die Erfassung des Motorstromes messtechnisch erfassten Reckkraft kann eine Regelung der Temperiervorrichtung erfolgen, wie dies zuvor erläutert wurde.

## Patentansprüche

1. Verfahren zum Betreiben einer Temperiervorrichtung (116) für die Temperaturkonditionierung von Vorformlingen (14) aus einem thermoplastischen Material in der Temperiervorrichtung (116), wobei der jeweilige Vorformling (14) durch die thermische Konditionierung in der Temperiervorrichtung (116) auf einen nachfolgenden Umformungsvorgang vorbereitet wird, bei dem mit einem unter einem Druck in den Vorformling (14) zugeführten Umformfluid der Vorformling (14) in einen Behälter (12) umgeformt wird und bei dem der Vorformling (14) durch eine Reckeinrichtung (11) in seiner axialen Richtung gereckt wird, wobei die Temperiervorrichtung (116) von einem Heizungsregler (400, B) anhand eines messtechnisch ermittelten Führungswertes in seiner Heizleistung geregelt wird, **dadurch gekennzeichnet, dass** der messtechnisch ermittelte Führungswert für die Regelung der Heizleistung der Temperiervorrichtung (116) ein messtechnisch erfasster Wert ist, aus dem die auf den Vorformling (14) ausgeübte Reckkraft ableitbar ist.

2. Verfahren nach Anspruch 1, **dadurch gekennzeichnet, dass** die Reckeinrichtung eine Reckstange (11) ist, die von einem elektrisch betriebenen Reckstangenantrieb (49) angetrieben wird, insbesondere von einem Linearmotor, wobei zur Bereitstellung des Führungswertes messtechnisch die Stromaufnahme des elektrischen Reckstangenantriebes (49) erfasst wird.

3. Verfahren nach Anspruch 1 oder 2, **dadurch gekennzeichnet, dass** als Führungswert ein bestimmter Bereich oder bestimmte charakteristische Punkte der messtechnisch erfassten Werte genutzt wird.

4. Verfahren nach einem der vorhergehenden Ansprüche, **dadurch gekennzeichnet, dass** messtechnisch ein Wert für eine Reibungskraft der Reckstangenbewegung erfasst wird, der im messtechnisch erfassten Führungswert berücksichtigt wird.

5. Verfahren nach einem der Ansprüche 1 bis 4, **dadurch gekennzeichnet, dass** eine Außentemperatur der Vorformlinge (14) messtechnisch erfasst und dem Heizungsregler (400, B) als zweiter Führungswert zugeführt wird, wobei die Temperiervorrichtung (10) Heizeinrichtungen (118) zum Aufheizen der Vorformlinge (14) und Kühleinrichtungen (119) zum Beaufschlagen von Vorformlingen (14) mit einem Kühlmedium aufweisen, wobei die Kühleinrichtungen (119) und die Heizeinrichtungen (118) vom Heizungsregler (400, B) jeweils anhand verschiedener Führungswerte geregelt werden, insbesondere wobei die Kühleinrichtungen (119) anhand des Führungswertes Außentemperatur und die Heizeinrichtungen (118) anhand des Führungswertes Reckkraft geregelt werden.

## EP 3 717 200 B1

**6.** Verfahren nach Anspruch 5, **dadurch gekennzeichnet, dass** der Heizungsregler (400, B) den Führungswert Reckkraft gegenüber dem Führungswert Außentemperatur priorisiert.

**7.** Verfahren zur Herstellung von Behältern (12) aus Vorformlingen (14) durch Umformen der Vorformlinge (14) nach deren thermischer Konditionierung in einer Temperiervorrichtung (116), **gekennzeichnet durch** ein Verfahren zum Betreiben der Temperiervorrichtung (116) für die Temperaturkonditionierung nach einem der vorhergehenden Verfahrensansprüche.

**8.** Temperiervorrichtung (116) für die Temperaturkonditionierung von Vorformlingen (14) aus einem thermoplastischen Material in der Temperiervorrichtung (116), wobei der jeweilige Vorformling (14) durch die thermische Konditionierung in der Temperiervorrichtung (116) auf einen nachfolgenden Umformungsvorgang vorbereitet wird, bei dem mit einem unter einem Druck in den Vorformling (14) zugeführten Umformfluid der Vorformling (14) in einen Behälter (12) umgeformt wird und bei dem der Vorformling (14) durch eine Reckeinrichtung (11) in seiner axialen Richtung gereckt wird, wobei die Temperiervorrichtung (116) einen Heizungsregler (400, B) aufweist, der in einem Regelkreis mit einem einen Führungswert ermittelnden Messeinrichtung angeordnet ist und der die Heizleistung der Temperiervorrichtung (116) anhand des Führungswertes regelnd ausgeführt ist, **dadurch kennzeichnet, dass** die Messeinrichtung messtechnisch angeordnet und ausgeführt ist zur Erfassung eines Messwertes, aus dem die von der Reckeinrichtung (11) ausgeübte Reckkraft ableitbar ist, und dieser Messwert den Führungswert der Regelung der Heizleistung bildet.

**9.** Temperiervorrichtung nach Anspruch 8, **dadurch gekennzeichnet, dass** die Reckeinrichtung als Reckstange (11) ausgebildet ist und einen elektrisch betriebenen Reckstangenantrieb (49) aufweist, insbesondere einen Linearmotor, wobei die Messeinrichtung die Stromaufnahme des elektrischen Reckstangenantriebes (49) erfassend ausgeführt ist.

**10.** Temperiervorrichtung nach Anspruch 8 oder 9, **dadurch gekennzeichnet, dass** der Heizungsregler (400, B) ausgeführt ist zur Regelung nach einem Integral über einen bestimmten Bereich oder nach bestimmten charakteristischen Punkten der messtechnisch erfassten Werte.

**11.** Temperiervorrichtung nach einem der Ansprüche 8 bis 10, **dadurch gekennzeichnet, dass** ein die Außentemperatur der Vorformlinge (14) erfassender Sensor (162) vorgesehen ist, der ausgeführt ist, dem Heizungsregler (400, B) seine Messwerte als zweiten Führungswert zuzuführen, wobei die Temperiervorrichtung (116) Heizeinrichtungen (118) zum Aufheizen der Vorformlinge (14) und Kühleinrichtungen (119) zum Beaufschlagen der Vorformlinge (14) mit einem Kühlmedium aufweisen, wobei der Heizungsregler (400, B) ausgeführt ist, die Kühleinrichtungen (119) und die Heizeinrichtungen (118) jeweils anhand verschiedener Führungswerte zu regeln, insbesondere zur Regelung der Kühleinrichtungen (119) anhand des Führungswertes Außentemperatur und zur Regelung der Heizeinrichtungen (118) anhand des Führungswertes, aus dem die Reckkraft ableitbar ist.

**12.** Temperiervorrichtung nach Anspruch 11, **dadurch gekennzeichnet, dass** der Heizungsregler (400, B) den Führungswert, aus dem die Reckkraft ableitbar ist, gegenüber dem Führungswert Außentemperatur priorisierend ausgeführt ist.

**13.** Maschine für die Herstellung von Behältern (12) aus Vorformlingen (14) durch Umformung mittels eines unter Druck in den Vorformling (14) eingeleiteten Formfluides, mit einer Reckstange (11) für die Ausführung einer Reckung der Vorformlinge (14), in deren axialer Richtung, und mit einer Temperiervorrichtung (116) für die Temperaturkonditionierung der Vorformlinge (14), **dadurch gekennzeichnet, dass** die Temperiervorrichtung (116) nach einem der Ansprüche 8 bis 12 ausgeführt ist.

**Claims**

**1.** A method for operating a temperature control device (116) for temperature conditioning of preforms (14) made of a thermoplastic material in the temperature control device (116), wherein the respective preform (14) is prepared for a subsequent forming process by thermal conditioning in the temperature control device (116), in which the preform (14) is formed into a container (12) by means of a forming fluid supplied under a pressure into the preform (14), and in which the preform (14) is stretched in its axial direction by a stretching device (11), wherein the heating capacity of the temperature control device (116) is controlled by a heating controller (400, B) based on a metrologically determined guide value, **characterized in that** the metrologically determined guide value for controlling the heating capacity of the temperature control device (116) is a metrologically detected value from which the stretching force exerted on the preform (14) can be derived.

2. The method according to claim 1, **characterized in that** the stretching device is a stretching rod (11), which is driven by an electrically operated stretching rod drive (49), in particular a linear motor, wherein the current consumption of the electric stretching rod drive (49) is detected metrologically in order to provide the guide value.

3. The method according to claim 1 or 2, **characterized in that** a certain range or certain characteristic points of the metrologically detected values are used as the guide value.

4. The method according to any one of the preceding claims, **characterized in that** a value for a frictional force of the stretching rod movement is detected metrologically, which value is taken into account in the metrologically detected guide value.

5. The method according to any one of claims 1 to 4, **characterized in that** an external temperature of the preforms (14) is detected metrologically and fed to the heating controller (400, B) as a second guide value, wherein the temperature control device (10) has heating devices (118) for heating the preforms(14) and cooling devices (119) for applying a cooling medium to preforms (14), wherein the cooling devices (119) and the heating devices (118) are each controlled by the heating controller (400, B) based on different guide values, in particular wherein the cooling devices (119) are controlled based on the outside temperature guide value, and the heating devices (118) are controlled based on the stretching force guide value.

6. The method according to claim 5, **characterized in that** the heating controller (400, B) prioritizes the stretching force guide value over the outdoor temperature guide value.

7. A method of producing containers (12) from preforms (14) by forming the preforms (14) after their thermal conditioning in a temperature control device (116), **characterized by** a method for operating the temperature control device (116) for temperature conditioning according to any one of the preceding method claims.

8. A temperature control device (116) for the temperature conditioning of preforms (14) made of a thermoplastic material in the temperature control device (116), wherein the respective preform (14) is prepared for a subsequent forming process by thermal conditioning in the temperature control device (116), in which the preform (14) is formed into a container (12) by means of a forming fluid supplied under pressure into the preform (14), and in which the preform (14) is stretched in its axial direction by a stretching device (11), wherein the temperature control device (116) has a heating controller (400, B), which is arranged in a control loop with a measuring device determining a guide value, and which is designed to control the heating capacity of the temperature control device (116) based on the guide value, **characterized in that** the measuring device is arranged and designed metrologically for detecting a measured value from which the stretching force exerted by the stretching device (11) can be derived, and this measured value forms the guide value for controlling the heating capacity.

9. The temperature control device according to claim 8, **characterized in that** the stretching device is designed as a stretching rod (11) and has an electrically operated stretching rod drive (49), in particular a linear motor, wherein the measuring device is designed to detect the current consumption of the electric stretching rod drive (49) .

10. The temperature control device according to claim 8 or 9, **characterized in that** the heating controller (400, B) is designed for control according to an integral over a specific range or according to specific characteristic points of the metrologically detected values.

11. The temperature control device according to any one of claims 8 to 10, **characterized in that** a sensor (162), which detects the external temperature of the preforms (14) is provided and designed to supply its measured values to the heating controller (400, B) as a second guide value, wherein the temperature control device (116) has heating devices (118) for heating the preforms (14) and cooling devices (119) for applying a cooling medium to the preforms (14), wherein the heating controller (400, B) is designed to control the cooling devices (119) and the heating devices (118) in each case based on different guide values, in particular to control the cooling devices (119) based on the outside temperature guide value and control the heating devices (118) based on the guide value, from which the stretching force can be derived.

12. The temperature control device according to claim 11, **characterized in that** the heating controller (400, B) is designed to prioritize the guide value, from which the stretching force can be derived, over the external temperature guide value.

13. A machine for producing containers (12) from preforms (14) through forming by means of a forming fluid introduced under pressure into the preform (14), having a stretching rod (11) for stretching the preforms (14), in their axial direction, and having a temperature control device (116) for temperature conditioning of the preforms (14), **characterized in that** the temperature control device (116) is designed according to any one of claims 8 to 12.

**Revendications**

1. Procédé de commande d'un dispositif de tempérage (116) pour le conditionnement thermique de préformes (14) en un matériau thermoplastique dans le dispositif de tempérage (116), les préformes (14) étant respectivement préparées par le conditionnement thermique dans le dispositif de tempérage (116) à un processus de formage suivant dans le cadre duquel la préforme (14) est transformée en un récipient (12) à l'aide d'un fluide de formage introduit sous pression dans la préforme (14), et dans le cadre duquel la préforme (14) est étirée en son sens axial à l'aide d'un dispositif d'étirage (11), la puissance de chauffage du dispositif de tempérage (116) étant réglée par un régulateur de chauffage (400, B) en fonction d'une valeur pilote métrologiquement déterminée, **caractérisé en ce que** la valeur pilote métrologiquement déterminée pour la régulation de la puissance de chauffage du dispositif de tempérage (116) est une valeur mesurée dont peut être dérivée la force d'étirage exercée sur la préforme (14).

2. Procédé selon la revendication 1, **caractérisé en ce que** le dispositif d'étirage est une barre d'étirage (11) actionnée par un entraînement de barre d'étirage (49) électrique, notamment par un moteur linéaire, l'absorption de courant de l'entraînement de barre d'étirage électrique (49) étant mesurée pour la mise à disposition de la valeur pilote métrologique.

3. Procédé selon la revendication 1 ou 2, **caractérisé en ce que** la valeur pilote utilisée est une certaine plage ou sont certains points caractéristiques des valeurs métrologiquement déterminées.

4. Procédé selon l'une des revendications précédentes, **caractérisé en ce qu'**une valeur est métrologiquement déterminée pour la force de frottement de la course de la barre d'étirage, laquelle valeur est prise en compte dans la valeur pilote métrologiquement déterminée.

5. Procédé selon l'une des revendications 1 à 4, **caractérisé en ce qu'**une température extérieure de la préformes (14) est métrologiquement déterminée et transmise au régulateur de chauffage (400, B) comme seconde valeur pilote, le dispositif de tempérage (10) présentant des dispositifs de chauffage (118) pour le réchauffement des préformes (14) et des dispositifs de refroidissement (119) pour soumettre des préformes (14) à l'action d'un agent de refroidissement, les dispositifs de refroidissement (119) et les dispositifs de chauffage (118) étant respectivement asservies au régulateur de chauffage (400, B) en fonction de valeurs pilotes différentes, les dispositifs de refroidissement (119) étant notamment asservis à la valeur pilote « température extérieure » et les dispositifs de chauffage (118) à la valeur pilote « force d'étirage ».

6. Procédé selon la revendication 5, **caractérisé en ce que** le régulateur de chauffage (400, B) donne à la valeur pilote « force d'étirage » la priorité par rapport à la valeur pilote « température extérieure ».

7. Procédé de fabrication de récipients (12) à partir de préformes (14) par formage des préformes (14) après leur conditionnement thermique dans un dispositif de tempérage (116), **caractérisé par** un procédé de commande du dispositif de tempérage (116) en vue du conditionnement thermique selon l'une des revendications de procédé précédentes.

8. Dispositif de tempérage (116) pour le conditionnement thermique de préformes (14) en un matériau thermoplastique dans le dispositif de tempérage (116), les préformes (14) étant respectivement préparées par le conditionnement thermique dans le dispositif de tempérage (116) à un processus de formage suivant dans le cadre duquel la préforme (14) est transformée en un récipient (12) à l'aide d'un fluide de formage introduit sous pression dans la préforme (14), et dans le cadre duquel la préforme (14) est étirée en son sens axial à l'aide d'un dispositif d'étirage (11), le dispositif de tempérage (116) présentant un régulateur de chauffage (400, B), lequel est agencé dans une boucle d'asservissement avec un système de mesure déterminant une valeur pilote, et lequel est conçu pour régler la puissance de chauffage du dispositif de tempérage (116) en fonction de la valeur pilote, **caractérisé en ce que** le système de mesure est métrologiquement agencé et conçu pour saisir une valeur mesurée dont peut être dérivée la force d'étirage exercée par le dispositif d'étirage (11), cette valeur mesurée étant la valeur pilote pour la régulation de la puissance de chauffage.

9. Dispositif selon la revendication 8, **caractérisé en ce que** le dispositif d'étirage est réalisé sous forme de barre d'étirage (11) et présente un entraînement de barre d'étirage électrique (49), notamment un moteur linéaire, le système de mesure étant conçu pour déterminer l'absorption de courant de l'entraînement de barre d'étirage électrique (49).

10. Dispositif selon la revendication 8 ou 9, **caractérisé en ce que** le régulateur de chauffage (400, B) est conçu pour opérer par intégration sur un certain intervalle ou en fonction de certains points caractéristiques des valeurs métrologiquement saisies.

11. Dispositif selon l'une des revendications 8 à 10, **caractérisé en ce que** un détecteur (162) détectant la température extérieure de la préforme (14) est prévu et conçu pour transmettre au régulateur de chauffage (400, B) ses valeurs mesurées comme seconde valeur pilote, le dispositif de tempérage (116) présentant des dispositifs de chauffage (118) pour le réchauffement des préformes (14) et des dispositifs de refroidissement (119) pour soumettre les préformes (14) à l'action d'un agent de refroidissement, le régulateur de chauffage (400, B) étant conçu pour régler les dispositifs de refroidissement (119) et les dispositifs de chauffage (118) en fonction de valeurs pilotes différentes, et notamment pour régler les dispositifs de refroidissement (119) en fonction de la valeur pilote « température extérieure » et les dispositifs de chauffage (118) en fonction de la valeur pilote dont peut être dérivée la force d'étirage.

12. Dispositif selon la revendication 11, **caractérisé en ce que** le régulateur de chauffage (400, B) donne à la valeur pilote dont peut être dérivée la force d'étirage la priorité par rapport à la valeur pilote « température extérieure ».

13. Machine pour la production de récipients (12) à partir de préformes (14) par formage à l'aide d'un fluide de formage introduit sous pression dans la préforme (14), avec une barre d'étirage (11) pour effectuer un étirage des préformes (14) en sens axial, et avec un dispositif de tempérage (116) pour le conditionnement thermique des préformes (14), **caractérisé en ce que** le dispositif de tempérage (116) est réalisé selon l'une des revendications 8 à 12.

Fig. 1

EP 3 717 200 B1

Fig. 2

Fig. 3

Axiale
Temperaturverteilung

Umfangs
Temperaturverteilung

Radiale
Temperaturverteilung

19

401
405
400
402
403
404

A

B

C

D

E

Fig. 4

B

$T_{Außen_{soll}}$

PI- Regler

$P_{Heiz_0}$

$P_{Startup}$

Heizung

Heizprozess

162

$T_{Außen_{is}}$

14

$\Delta S_u$

$P_{heiz_0}$

PI-Regler

Lüftung

$P_{Lüfter_0}$

Fig. 5

Fig. 6

Fig. 7

Fig. 8

EP 3 717 200 B1

**Gefilterte Reckkrafturve**

Fig. 9

Fig. 10

Fig. 11

24

$P_{Heiz}$  $n_{L\ddot{u}fter}$  $P_{Heiz}$  $n_{L\ddot{u}fter}$  $P_{Heiz}$  $T_{Oberfl\ddot{a}che}$

$F_{Reck}$

$T_t$

Pyrometer 2

$P_{Heiz}$  $P_{Heiz}$  $P_{Heiz}$  $P_{Heiz}$  $P_{Heiz}$

Pyrometer 1 (optional)

$T_0$

1 .. Ausgleichsstrecke I    5 .. Ausgleichsstrecke II
2 .. Lüfterkasten (Option)  6 .. Kopfrad
3 .. Heizkasten

Fig. 12

EP 3 717 200 B1

$P_{Heiz}$ → $\dfrac{K_{PF}(\underline{BP},PG)}{(1+T_{PF}\cdot s)^k}$ → $F_{Reck}$

$\dfrac{K_{PT}(PG)}{(1+T_{PT}\cdot s)^k}$

$\dfrac{K_{nF}(\underline{BP},PG)}{(1+T_{nF}\cdot s)^k}$

$n_{Lüfter}$ → $\dfrac{K_{nT}(PG)}{(1+T_{nT}\cdot s)^k}$ → $T_{Oberfläche}$

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4340291 A1
- DE 4212583 A1
- DE 2352926 A1
- WO 9948669 A1
- US 7914726 B2
- DE 102010007541 A1
- EP 2749397 A1
- WO 2011063784 A2
- WO 2010054610 A1
- WO 2007110018 A1
- EP 2117806 B1